# EUROPEAN PATENT SPECIFICATION

(11) **EP 3 249 829 B1**
(45) Date of publication and mention of the grant of the patent: **13.03.2019**
(21) Application number: 17179043.9
(22) Date of filing: 31.01.2007
(51) Int. Cl.: H04B 7/26, H04L 1/18, H04L 5/00, H04W 56/00, H04W 72/12, H04W 74/04

(54) **METHOD AND APPARATUS FOR PROVIDING AND UTILIZING A NON-CONTENTION BASED CHANNEL IN A WIRELESS COMMUNICATION SYSTEM**
VERFAHREN UND VORRICHTUNG ZUR BEREITSTELLUNG UND VERWENDUNG EINES NICHT AUF KONFLIKT BASIERENDEN KANALS IN EINEM DRAHTLOSKOMMUNIKATIONSSYSTEM
PROCÉDÉ ET APPAREIL PERMETTANT DE FOURNIR ET D'UTILISER UNE VOIE EXEMPTE DE CONTENTION DANS UN SYSTÈME DE COMMUNICATION SANS FIL

(30) Priority: 31.01.2006 US 763791 P; 23.01.2007 US 886164 P
(43) Date of publication of application: 29.11.2017
(62) Divisional of application: 07762898.0
(73) Proprietor: InterDigital Technology Corporation, Wilmington, DE 19809 (US)
(72) Inventor: TERRY, Stephen, E., Northport, NY 11768 (US); WANG, Jin, Central Islip, NY 11722 (US); CHANDRA, Arty, Manhasset Hills, NY 11040 (US); CHEN, John, S., Downingtown, PA 19335 (US); ZHANG, Guodong, Farmingdale, NY 11735 (US)
(74) Representative: AWA Sweden AB

(56) References cited:
- EP-A1- 1 168 876
- WO-A1-03/024028
- IPWIRELESS: "Initial Access Procedure and Uplink Synchronisation", 3GPP DRAFT; R1-060241, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, [Online] vol. RAN WG1, no. Helsinki, Finland; 20060123 - 20060125, 19 January 2006 (2006-01-19), XP050951040, Retrieved from the Internet: URL:http://www.3gpp.org/ftp/tsg_ran/WG1_RL 1/TSGR1_AH/LTE_AH_0601/Docs/> [retrieved on 2006-01-19]

## Description

### FIELD OF INVENTION

The present invention relates to wireless communication systems. More particularly, the present invention relates to a method and apparatus for providing and utilizing a non-contention based channel in a wireless communication system.

### BACKGROUND

The Long Term Evolution (LTE) of wideband code division multiple access (WCDMA) third generation (3G) cellular networks is directed to universal mobile telecommunication systems (UMTS) beyond the third generation partnership project (3GPP) Release 7. LTE may also be referred to as evolved UMTS terrestrial radio access (E-UTRA). One of the main technological challenges of such networks is efficient channel usage when there is a varied traffic mix in the system. This may be particularly challenging when the various types of traffic utilize different transmission protocols, such as voice over internet protocol (VoIP), file transfer protocol (FTP), or hypertext transfer protocol (HTTP). For example, in any particular wireless communication system, there may be numerous VoIP users, FTP users, and HTTP users all transmitting simultaneously.

Additionally, the wireless transmit/receive units (WTRUs) in the system perform a variety of tasks and functions that require access to the transmission medium in order to communicate with a base station. For example, the WTRUs must perform functions such as timing advance, measurement reporting, requesting uplink (UL) physical resource allocation, providing schedule information for downlink (DL) allocation, keep-alive heartbeat, hybrid automatic repeat request (HARQ) feedback and/or Medium Access Control (MAC) or Radio Resource Control (RRC) layer signaling.

The WTRUs in a wireless communication system could utilize a Random Access Channel (RACH) or physical RACH (PRACH) in order to communicate with the base station to perform these functions. However, a RACH is a contention-based channel, and its use incurs delays that tend to affect quality of service (QoS) and may result in inefficient use of physical resources. A reliance on RACH for interactive applications between transmissions may also negatively impact system capacity.

Alternatively, the WTRU could utilize a UL shared channel to perform these functions. However, a UL shared channel resource request would first have to be transmitted on a RACH/PRACH, which would be an inefficient use of resources and would add delay to these functions due to the two step procedure.

In the context of LTE, it would be desirable to utilize an access protocol such as a non-contention based (NCB) channel, which may also be referred to as a "thin" or "dedicated" channel. Thin channels are generally contention-free, or low contention, control channels that are primarily used for access.

It would therefore be advantageous to provide a method and apparatus for providing and utilizing an NCB channel that would not be subject to the limitations of the current state of the art.

EP1168876A1 and the document "Initial Access Procedure and Uplink Synchronisation, 3GPP Draft, R1-060241" disclose access procedures in wireless communications systems.

### SUMMARY

The invention is defined by the appended claims.

The present invention is directed to the establishment, maintenance, and utilization of a non-contention based (NCB) channel in a wireless communication system comprising at least one Evolved Node-B (eNB) and a plurality of wireless transmit/receive units (WTRUs). Each NCB channel is dedicated and allocated for use by a particular WTRU in the system for utilization in a variety of functions, and the allocation is communicated to the WTRUs in the system by the eNB. The wireless communication system analyzes the allocation of each NCB channel as required, and each NCB channel is reallocated as required.

### BRIEF DESCRIPTION OF THE DRAWINGS

A more detailed understanding of the invention may be had from the following description of a preferred embodiment, given by way of example and to be understood in conjunction with the accompanying drawings wherein:.
Figure 1 shows an exemplary wireless communication system configured in accordance with the present invention;
Figure 2 is a functional block diagram of an eNB and a WTRU of the wireless communication system of Figure 1;
Figure 3 is a flow diagram of a method for establishing and maintaining a non-contention based (NCB) channel with a particular WTRU, in accordance with the present invention;
Figure 4 is an exemplary time-frequency diagram depicting an NCB channel allocation to a plurality of WTRUs, in accordance with the present invention;
Figure 5 is a flow diagram of a method for determining a timing advance using an NCB channel, in accordance with the present invention;
Figure 6 is a flow diagram of a method for determining scheduling modifications using an NCB channel, in accordance with another embodiment of the present invention;
Figure 7 is a flow diagram of a method of allocating resources using an NCB channel, in accordance with another embodiment of the present invention;
Figure 8 is an exemplary time-frequency diagram depicting an allocation of resources, in accordance with the method of Figure 6;
Figure 9 is an exemplary block diagram depicting a frequency diverse NCB channel allocation in a system comprising a plurality of sub-channels in accordance with the present invention;
Figure 10 is an exemplary time-frequency diagram depicting a time and frequency hopping NCB channel allocation, in accordance with an embodiment of the present invention; and
Figure 11 is an exemplary diagram depicting differing NCB channel requirements for a WTRU, in accordance with an embodiment of the present invention.

### DETAILED DESCRIPTION OF THE PREFERRED EMBODIMENTS

When referred to hereafter, the terminology "wireless transmit/receive unit (WTRU)" includes but is not limited to a user equipment (UE), a mobile station (STA), a mesh point (MP), a fixed or mobile subscriber unit, a pager, a cellular telephone, a personal digital assistant (PDA), a computer, or any other type of user device capable of operating in a wireless environment. When referred to hereafter, the terminology "base station" includes but is not limited to a Node-B, a site controller, an access point (AP), or any other type of interfacing device capable of operating in a wireless environment.

In general, the present invention is directed to a method and apparatus for establishing, maintaining, and utilizing non-contention based (NCB) dedicated channels. The NCB channels, in a preferred embodiment of the present invention, are channels that are dedicated to a particular WTRU for use during a particular time and may be re-allocated depending on system need. The NCB channel utilization may aid in avoiding latency and inefficient use of physical resources associated with an UL contention based procedure, and may also be used in downlink or in ad-hoc networks.

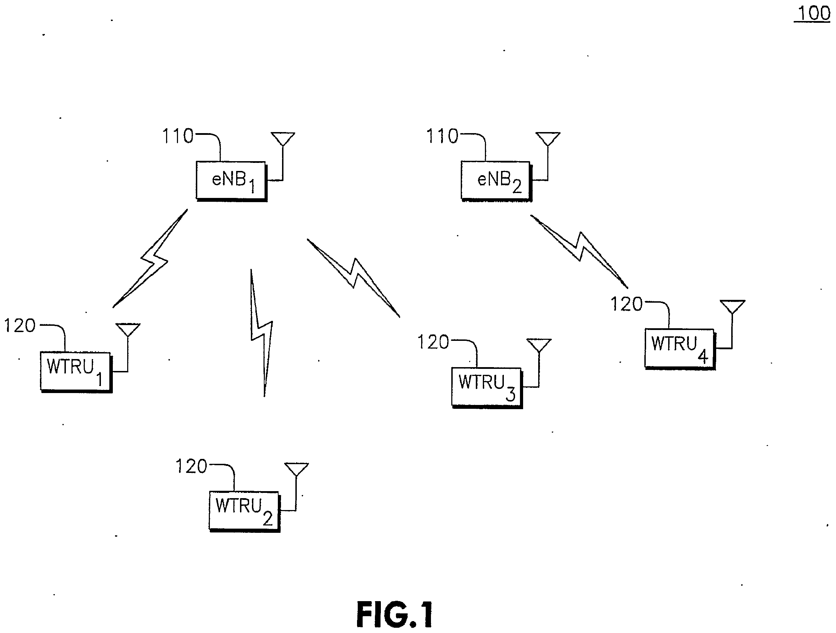

Figure 1 shows an exemplary wireless communication system 100 (also referred to hereinafter as "system") configured in accordance with the present invention. The wireless communication system 100 includes a plurality of evolved Node-Bs (eNBs) 110 (designated as eNB₁ and eNB₂) and a plurality of WTRUs 120 (designated WTRU₁, WTRU₂, WTRU₃, and WTRU₄), in wireless communication with the eNBs 110. The WTRUs 120 depicted in the wireless communication system 100 may comprise any combination of WTRUs, such as STAs, MPs, and the like. In a preferred embodiment, the eNBs 110 provide access to a network to the WTRUs 120 (WTRU₁, WTRU₃, WTRU₃, and WTRU₄) in communication with them. As shown in an exemplary configuration in Figure 1, WTRU₁, WTRU₂, and WTRU₃ are currently in communication with eNB₁ while WTRU₄ is in currently in communication with eNB₂. However, any of the WTRUs 120 may be in communication with either of the eNBs 110, apart from what is depicted in Figure 1.

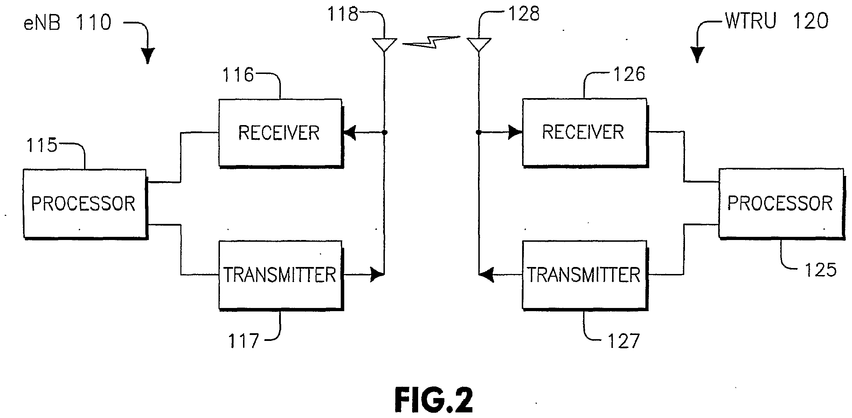

Figure 2 is a functional block diagram of the eNB 110 and a WTRU 120 of the wireless communication system 100 of Figure 1. As shown in Figure 2, the eNB 110 and WTRU 120 are in wireless communication with one another, and are configured to utilize an NCB channel in the wireless communication system 100. In one example, the WTRU 120 may be a mobile STA or an MP in communication with the eNB 110, which provides access to a network for the WTRU 120.

In addition to the components that may be found in a typical eNB, the eNB 110 includes a processor 115, a receiver 116, a transmitter 117, and an antenna 118. The processor 115 is configured to establish, maintain and utilize an NCB channel in accordance with the present invention. The receiver 116 and the transmitter 117 are in communication with the processor 115. The antenna 118 is in communication with both the receiver 116 and the transmitter 117 to facilitate the transmission and reception of wireless data.

Similarly, in addition to the components that may be found in a typical WTRU, the WTRU 120 includes a processor 125, a receiver 126, a transmitter 127, and an antenna 128. The processor 125 is configured to establish, maintain and utilize an NCB channel in accordance with the present invention. The receiver 126 and the transmitter 127 are in communication with the processor 125. The antenna 128 is in communication with both the receiver 126 and the transmitter 127 to facilitate the transmission and reception of wireless data.

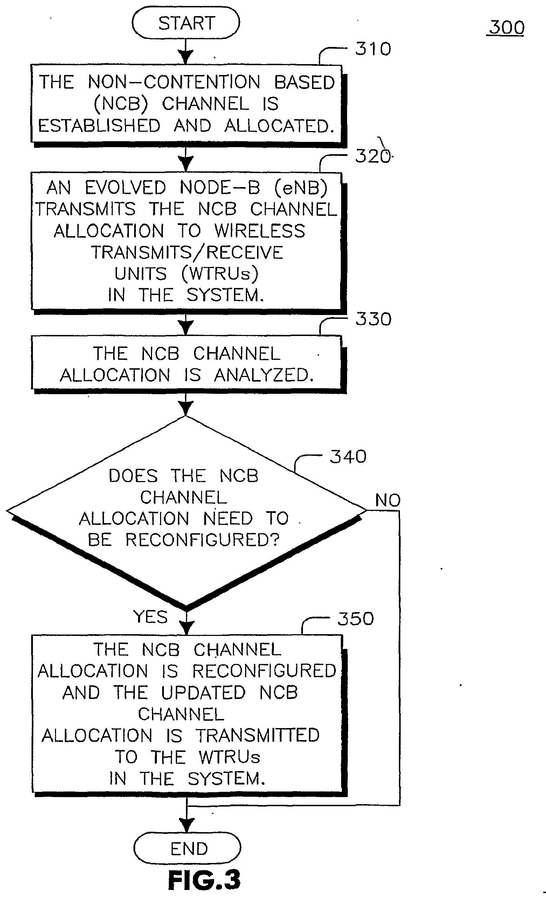

Figure 3 is a flow diagram of a method 300 for establishing and maintaining an NCB channel with a particular WTRU, in accordance with the present invention. In step 310, the NCB channel is established and allocated. The NCB channel may be configured by the eNB 110. For example, a network operator may identify certain radio resource management (RRM) parameters that are used by the eNB 110 to determine the NCB channel configuration and when it is established and reconfigured.

In the establishment of the NCB channel, the duration and periodicity of the channel may be configured. In a preferred embodiment, the duration may be infinite. Additionally, the system or WTRU 120 may have the ability to terminate or reconfigure the allocated NCB channel. In the infinite case, signaling from either the eNB 110 or the WTRU 120 may terminate the NCB channel allocation.

The NCB channel may be allocated to a particular WTRU 120 for a given duration. The duration may be a subset of time for the WTRU 120 to utilize the NCB channel or the WTRU 120 may be assigned a periodic interval for usage of the NCB channel. It should also be noted that any combination of the above allocations may be utilized, and the durations and/or periodic operation may include the physical resources allocated being time multiplexed among a plurality of WTRUs 120.

The wireless communication system 100 may utilize a number of characteristics in configuring the NCB channel. For example, the NCB channel may be configured to support functions such as timing advance, measurement reporting, UL physical resource requesting, providing information for DL resource scheduling, keep-alive heartbeat, hybrid automatic repeat request (HARQ) feedback and/or Medium Access Control (MAC) or Radio Resource Control (RRC) layer signaling, all of which are described herein following. Furthermore, the NCB channel may be configured to support a combination of functions. For example, a particular WTRU 120 performing a scheduling request may also be concurrently providing measurement reporting or concurrently providing a synchronization burst to perform timing advance. Accordingly, any combination of these functions may be performed in a common signaling procedure. Therefore, any number of functions may be performed concurrently on a configured NCB channel. In another embodiment, a periodic NCB channel may be configured following a predefined period during which no UL transmissions have been occurring.

Additionally, the service types such as Voice over IP (VoIP) or internet gaming, the Quality of Service (QoS) requirements for services currently active on the WTRU 120 may be utilized, as well as the activity rate of those services.

The configuration of the NCB channel may also include multiplexing it in the frequency domain, such as through frequency division multiplexing (FDM). The NCB channel may also be multiplexed in the code domain by using spreading codes, in the time domain, and in the space domain using spatial division multiplexing (SDMA) or other MIMO techniques. Furthermore, the NCB channel may be multiplexed by any combination of the above multiplexing techniques.

In this way, physical resources utilized by the NCB channel may be configured for use by more than one WTRU 120 at various times without being contended for by those WTRUs 120 during any particular period of time. For example, the NCB channel may be allocated to WTRU₁ for a particular periodicity and/or duration, and allocated to WTRU₂ for another periodicity and/or duration. Accordingly, the NCB channel is typically dedicated to a particular WTRU 120 at a particular moment in time, but shared among a plurality of WTRUs 120 over various periods in time.

Still referring to Figure 3, the NCB channel allocation is transmitted to the WTRUs 120 in the wireless communication system 100 by the eNB 110 (step 320) with which the WTRUs 120 are in communication. In the example depicted in Figure 1, eNB₁ transmits the NCB channel allocation to WTRU₁, WTRU₃, and WTRU₃, while eNB₂ transmits the NCB channel allocation to WTRU₄. This transmission, or communication, may be included in the downlink (DL) common control channel signaling or a dedicated control channel signal mapped to a DL shared channel among the WTRUs 120.

Alternatively, the NCB channel may be allocated by the DL common control channel as other uplink (UL) shared channel allocations. Additionally, where the NCB channel is a control channel separate from the UL shared channel used for user data transmissions, a logical control channel mapped to the DL shared channel may be utilized.

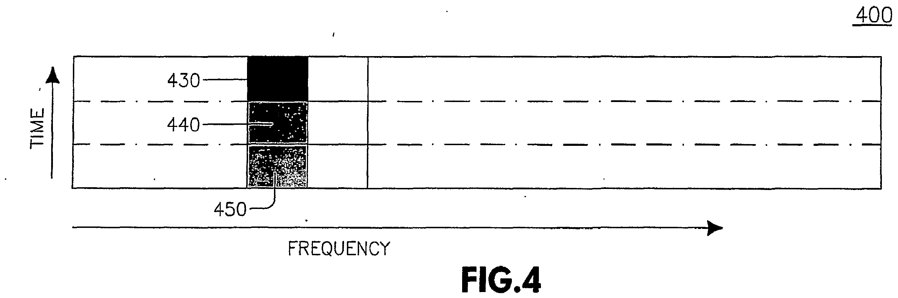

Figure 4 is an exemplary time-frequency diagram 400 depicting an allocation of NCB channels (designated 430, 440, and 450) to a plurality of WTRUs 120, in accordance with an embodiment of the present invention. In particular, NCB channel 430 may be dedicated to WTRU₁, NCB channel 440 may be dedicated to WTRU₂, and NCB channel 450 may be dedicated to WTRU₃. Accordingly, in the present example, WTRU₁ accesses eNB₁ on NCB channel 430, WTRU₂ accesses eNB₁ on NCB channel 440, and WTRU₃ accesses eNB₁ on NCB channel 450, whereby the WTRUs 120 do not need to contend with one another for access to the eNB 110.

As shown in Figure 3, the allocation of the NCB channel is analyzed by the wireless communication system 100 (step 330) to ensure an optimal allocation. For example, the wireless communication system 100 may analyze the amount of time the currently allocated NCB channel has remained idle, or the QoS requirements for the various WTRUs 120 in the system 100. Alternatively, the system 100 may determine that the NCB channel should be reconfigured upon reception of channel allocation signaling whereby data capacity may need to be increased or decreased. If the system 100 determines that a reconfiguration or reallocation is required based on the analysis (step 340), then the system 100 may reconfigure the allocation of the NCB channel, and transmit the updated NCB channel allocation to the WTRUs 120 in the system (step 350).

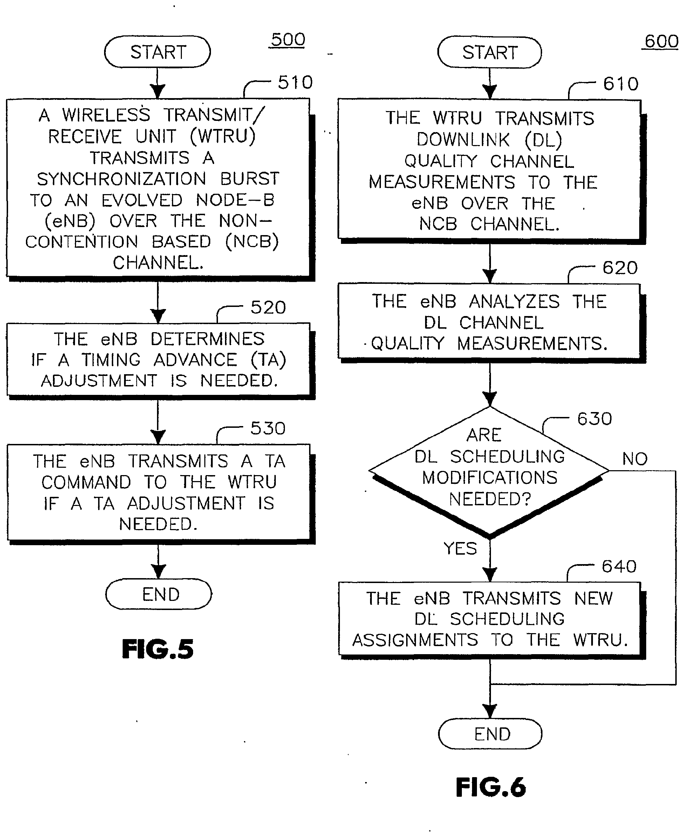

Figure 5 is a flow diagram of a method 500 for determining a timing advance using an NCB channel, in accordance with the present invention. In step 510, the WTRU 120 transmits a synchronization burst to the eNB 110 over the NCB channel allocated to the WTRU 120. This synchronization burst may be transmitted periodically or dynamically based on specific triggering events. Since timing advance is relative to signal propagation delay and a maximum WTRU speed is known, a periodicity requirement of timing advance bursts can be calculated and matched with the configured periodicity of the NCB channel. Preferably, the synchronization bursts are coordinated with the time intervals that the NCB channel exists for that particular WTRU 120.

The eNB 110 receives the synchronization burst from the WTRU 120 and performs timing estimation to determine whether or not a timing advance (TA) adjustment is needed to maintain physical synchronization between the WTRU 120 and the eNB 110 (step 520). If a TA adjustment is needed (step 520), then the eNB transmits a TA command to the particular WTRU 120 (step 530). This TA command may be sent on the DL common control channel or on a control channel mapped to a DL shared channel assigned to the particular WTRU 120.

Since a periodic NCB channel may be configured following a predefined period during which no UL transmissions have been occurring, the NCB channel can be dynamically allocated, or established, during periods of UL inactivity to maintain synchronization. By maintaining synchronization during periods of inactivity with the NCB channel, transmission may be restarted with reduced latency which allows QoS requirements to be better maintained.

Figure 6 is a flow diagram of a method 600 for determining DL scheduling modifications using an NCB channel, in accordance with another embodiment of the present invention. The WTRU 120 transmits a burst to the eNB 110 over the NCB channel reporting the DL channel quality measurements (step 610). When the eNB 110 receives the channel quality measurements, the eNB 110 analyzes them to determine whether or not modifications, or adjustments, to DL scheduling need to be made (step 620). DL channel quality measurements may be reported periodically or dynamically based on triggering events. Preferably, channel quality reporting coincides with the configured allocation of the NCB channel. Use of the NCB channel for WTRU measurement reporting provides a more efficient use of physical resources and provides UL information signaling with reduced latency compared to use of a RACH, or dynamically requesting a UL shared channel for this purpose. If a DL scheduling modification is needed (step 630), then the eNB 110 transmits the new DL channel scheduling assignments to the WTRU 120 (step 640).

In the embodiment shown in Figure 6, the NCB channel may be periodically configured or event triggered for UL measurement reporting. Accordingly, as described above, this use of the NCB channel may coincide with other concurrent functions or uses of the NCB channel, such as timing advance, scheduling requests, measurement reporting and the like.

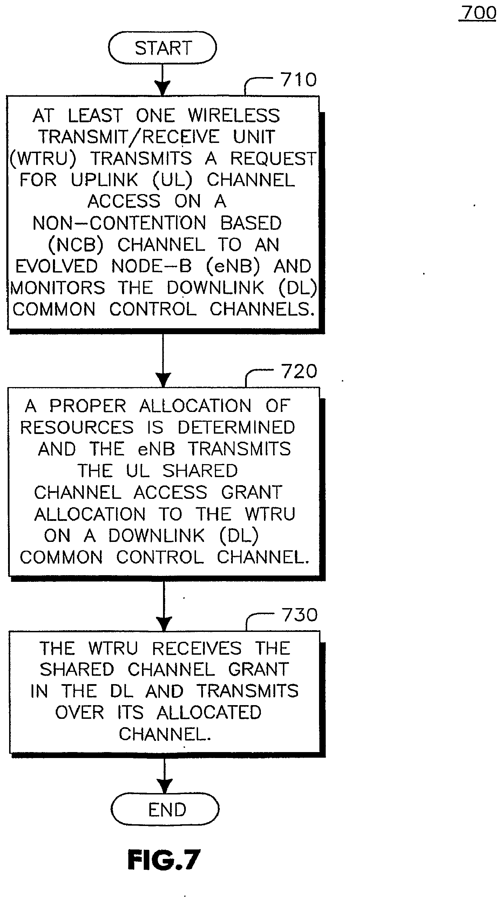

Figure 7 is a flow diagram of a method 700 of requesting UL resources using an NCB channel, in accordance with another embodiment of the present invention. In step 710, one or more WTRUs 120 transmit a scheduling request for UL channel access on their dedictated NCB channel that has been configured and allocated for them. In the present embodiment, the NCB channel may be periodically configured or even triggered for support of scheduling requests. Additionally, the occurrence of scheduling requests may coincide with other NCB channel uses, such as timing advance, channel measurement reporting and the like.

Referring back again to Figure 4, the transmitted request in step 710 of Figure 7 may be a burst transmitted by one of the WTRUs 120 on its respective NCB channel (430, 440, or 450) requesting an allocation of UL physical resources whereby the presence of the burst itself is indicative of the resource allocation request for that particular WTRU 120. Alternatively, the burst may be an indication which, for example, may only include one bit of information, such as a "zero (0)" or a "one (1)" that indicates whether or not a resource allocation is needed. The burst may also include information related to the resource allocation request, such as the amount of UL data the particular WTRU 120 will need to transmit, the priority of the data, the QoS, latency requirement, BLER requirement and the like.

The NCB may be configured with periodic operation with or without a specified duration. Preferably, the UL channel allocation request will coincide with the periodic operation of the NCB channel. If an urgent UL resource request is required and an NCB is not available, the RACH may be used. The UL resource request method may coincide with the timing advance method 500, or measurement reporting method 600. In these cases the NCB channel provides multiple purposes in a common UL transmission.

Based on the UL resource request, a proper allocation of resources is determined and the eNB 110 transmits the UL shared access grant to the one or more WTRUs 120 on a DL common control channel (step 720), as shown in Figure 7.

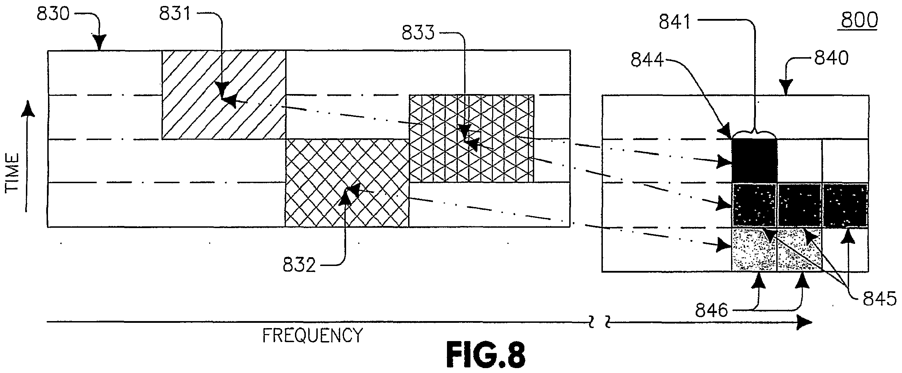

For purposes of example, Figure 8 is an exemplary time-frequency diagram 800 depicting an allocation of physical resources, in accordance with step 720 of the method 700 of Figure 7. Figure 8 is a time-frequency diagram 800 that includes an allocated resources portion 830 and an allocated resource blocks portion 840. In the present example, the allocated resources portion 830 depicts a resource allocation for WTRU₁ (831), a resource allocation for WTRU₂ (832), and a resource allocation for WTRU₃ (833). In this manner, the resource allocation may be determined implicitly by the WTRUs 120 based on the resource utilized for the access grant in the DL transmission.

Alternatively, the resource allocations 831, 832, and 833 may correspond to allocated resource blocks in the allocated resource blocks portion 840. For example, referring again to Figure 8, resource allocation 831 corresponds to a single resource block 844 allocated for WTRU₁. However, resource allocation 832 corresponds to three (3) resource blocks 845 that are allocated for WTRU₂, while resource allocation 833 corresponds to two (2) resource blocks 846 that are allocated for WTRU₃. It should be noted that the resource block allocation shown in Figure 8 is exemplary and any particular resource allocation may correspond to a single resource block or to a plurality of resource blocks. An identifier (ID) for the particular WTRU 120 that is allocated a resource block may be included to identify to the WTRU 120 which resource block belongs to it. Alternatively, the DL control channel may be common to a plurality of WTRUs 120.

In any event, the resource allocation is identified to the WTRU 120 as to any period that the resource is allocated for that WTRU 120, as well as where that allocation exists. For example which resource blocks are allocated to a particular WTRU 120 is identified to the WTRU 120.

Once particular WTRUs 120 receive their shared channel access grants in the DL, the WTRUs 120 transmit over their allocated channels or resource blocks (step 730).

In yet another embodiment, the NCB channel may be utilized for keep-alive heartbeat. For example, the WTRU 120 transmits a periodic keep-alive signal over the NCB channel that is utilized by the system to detect a failure of the radio link between the WTRU 120 and the eNB 110. In this manner, the system can institute any action required to restore any lost connectivity with this particular WTRU 120 as well as recover any resources that are allocated to the WTRU 120. Additionally, as with various other NCB channel functions and uses, signaling for the keep-alive heartbeat may be combined with other NCB channel functions whose UL channel requirement coincides. For the purposes of a keep-alive signal a similar NCB channel may be allocated in the DL so that the WTRU may take proper actions required following a link failure.

In another embodiment, the NCB channel may be utilized for HARQ feedback. For example, in response to HARQ transmissions, the NCB channel may be utilized for transmission of positive (successful) or negative (unsuccessful) acknowledgements (ACKs). Additionally, the process number or any other HARQ parameters used to coordinate HARQ transmissions may be transmitted over the NCB channel, depending on the HARQ method. The NCB channel may be particularly useful in the case of synchronous HARQ operation where periodic feedback may be aligned with the periodic configuration of the NCB channel.

In another alternative embodiment, the NCB channel may be utilized for MAC signaling, RRC signaling and/or small amounts of user data. Additionally, coordination of the MAC and/or RRC layer operation may be achieved over the NCB channel. In these cases, procedures with known frequency may be mapped to the NCB channel to optimize the use of physical resources. The WTRUs 120 may also transmit small amounts of data on their allocated NCB channel. In this manner, the NCB channel may be used by WTRUs 120 to transmit small amounts of user data when shared channel or other alternate channel is not available/allocated. Allowing user data on the NCB channel reduces transmission latency and improves QoS.

In order to provide resilience against frequency selective fading, the UL NCB channels may comprise several sub-channels in an XFDMA system, such as an orthogonal frequency-division multiple-access (OFDMA) or single carrier (SC) FDMA system (SC-FDMA). In one subframe of an XFDMA system, there are short blocks (SB) and long blocks (LB). An SB is typically used to transmit the reference signals and an LB is typically used to transmit data packets. The reference signals provide a complete view of the channel layout in one OFDM subframe for a particular WTRU 120, and may also be utilized for channel measurements to determine the severity of the frequency selective fading. Accordingly, it can be used to determine how diverse in frequency the NCB channel allocation will need to be.

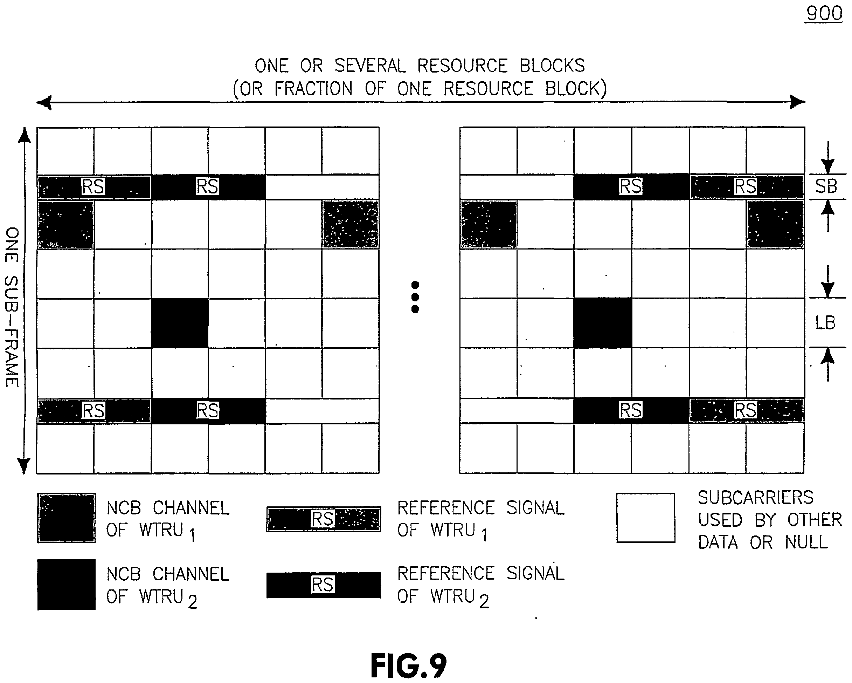

Figure 9 is an exemplary block diagram 900 depicting a frequency diverse NCB channel allocation in a system comprising a plurality of sub-channels, in accordance with the present invention. For example, as depicted in Figure 9, the NCB channel allocations for WTRU₁ and WTRU₂ are shown spread over a plurality of sub-channels that may exist in a single resource block or in a fraction of a resource block. Then the NCB channel is allocated in a distributed manner based on the UL channel measurements.

Further efficiency may be achieved in the utilization of the NCB channel where the resource is changed for a particular WTRU 120. For example, the NCB resource allocation may be changed according to a pre-configured time and/or frequency hopping pattern. An NCB channel with a very small amount of channel resources may not have good frequency diversity even if the NCB channel is spread as wide as possible in the frequency domain. Therefore, applying time and/or frequency hopping may further improve the diversity and ensure the NCB channel is received properly at a receiver side.

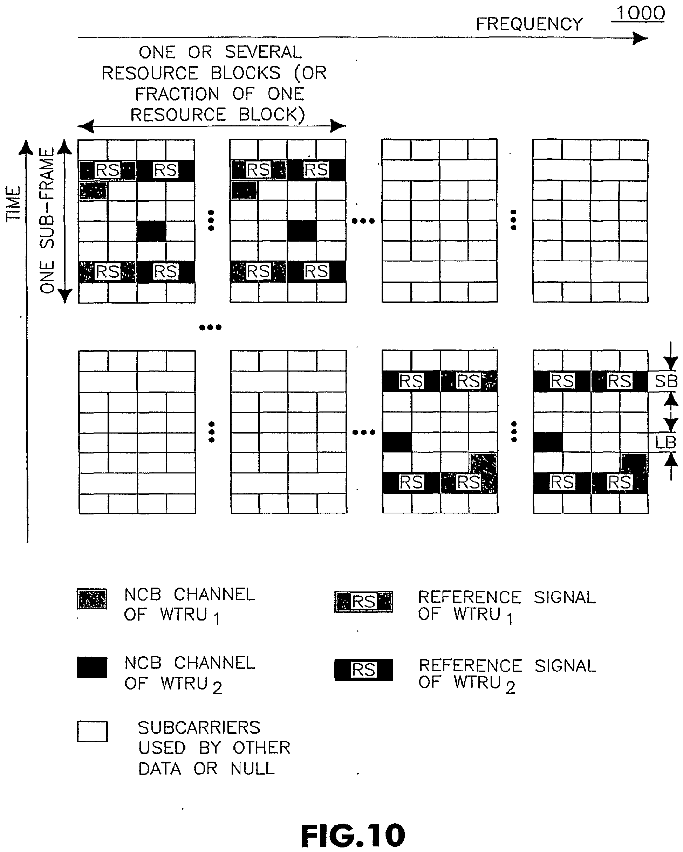

Figure 10 is an exemplary time-frequency diagram 1000 depicting a time and frequency hopping NCB channel allocation, in accordance with an embodiment of the present invention. In different subframes, where the resource is allocated to a particular WTRU 120, the frequency allocation of the resource for an NCB channel will change across subframes. This frequency allocation change is based on the hopping pattern in the time and/or frequency domain, which is pre-configured during the NCB allocation phase. This is another alternative embodiment for physical realization of the NCB channel. The frequency/timing hopping pattern is an important message when signaling NCB channel allocation for a particular WTRU 120 so that it can transmit using the NCB channel according to that hopping pattern. Likewise, the eNB 110 can receive signaling by following the same pattern in a coordinated way.

The NCB channel may be further configured by the eNB 110 transmitting control messages to the WTRU 120. For example, the eNB 110 may transmit a resource message relating to sub-carriers, space (antenna beams), slots, or codes. Additionally, the eNB 110 may transmit a hopping sequence, such as an index of a prescribed set of hopping sequences to the WTRU 120 to which the NCB channel is allocated.

In an additional embodiment, the NCB channel may be allocated along with both real time (RT) and non real time (NRT) services to assist dynamic, semi-dynamic, persistent or semi-persistent scheduling for the services.

For NRT services, the NCB channel may be allocated to support dynamic scheduling. For example, the NCB channel may be used for timing advance, periodic measurement reporting, UL physical resource requesting, UL traffic status reporting , providing information for DL resource scheduling, HARQ feedback and/or MAC/RRC layer signaling, and the like. The NCB channel supporting dynamic or semi-dynamic scheduling may be configured at the beginning of the dynamic or semi-dynamic scheduling of an NRT service for one WTRU, or in the middle of the scheduling. Also the NCB channel can be terminated, modified or extended as situations such as WTRU mobility or channel conditions change.

An NCB channel for some particular applications may have consistent periodicity from the beginning of the scheduling allocation of the NCB. Alternatively, the NCB channel for other particular applications may start its periodicity at a certain time after each bursty transmission.

For example, in the former case, timing advance and measurement reporting may require continuous reporting to support accurate scheduling decisions. However, a HARQ ACK/NAK feedback does not necessarily need to maintain its periodicity from the beginning of the scheduling, and the NCB channel can therefore start a certain time after one bursty transmission for several times unless successful reception is declared.

The duration of the NCB channel may be terminated before its allocated life cycle expires or be extended based on system demand. Termination of an existing NCB may be signaled through an indication from the eNB 110 via an RRC message, MAC signaling (such as a MAC header) or layer 1 or layer 2 (L1/L2) signaling. In one example, the indication can simply be an "OFF (0)" signal.

The termination of the NCB channel allocation can be explicitly or implicitly signaled. For example, at the end of voice silent period, the WTRU 120 sends a voice activity change indication to eNB 110 over the NCB channel. The eNB 110 then allocates new persistent UL radio resources for voice activity over the DL scheduling channel. Upon receiving the UL resource allocation on the DL scheduling channel, the WTRU 120 may implicitly detect the termination of existing NCB channel allocations. Alternatively, one explicit indication can be sent from the eNB 110 to the WTRU 120 to signal the termination.

An extention of the NCB channel may be for substantially the same duration as the previous allocation or for a different duration, either longer or shorter. The extension may also include a configuration of new time and frequency allocation patterns, such as frequency hopping.

The periodicity of the NCB channel may be determined based on the application of the NCB channel. For example, in a WTRU high mobility scenario, a high periodicity NCB channel should be allocated to support UL timing maintenance. How often measurement reports should be sent to the eNB 110 are also determined based on the application of the NCB channel.

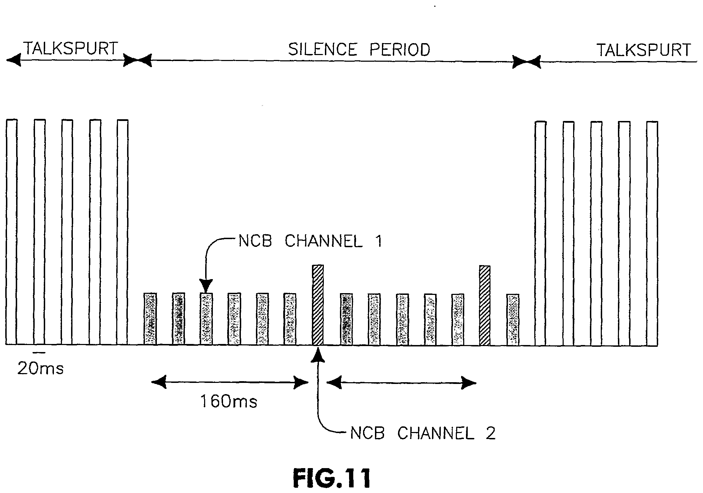

Figure 11 is an exemplary diagram depicting differing NCB channel requirements for a WTRU, in accordance with an embodiment of the present invention. Referring to Figure 11, more than one NCB channel may simultaneously be allocated to a particular WTRU 120 for different scheduling purposes. These different NCB channels may have different configurations. For example, among other things, NCB channel periodicity and channel capacity may be configured to meet different requirements.

In a voice silent period, there may be NCB channels used to maintain UL timing, to send voice activity reports, to send measurement reports, to send UL scheduling requests and to send voice silence indication detections (SIDs), and the like to eNB 110. However, the periodicity for SID packets in the UL is every 160 milliseconds (ms), which may be different from the periodicity required for other functions. For example, the periodicity for a UL timing advance function may be either shorter or longer than the periodicity for sending SIDs. Also, radio resources used for SID packets and other UL utility purposes are different, which again requires different NCB channel configurations. Accordingly, different NCB channel configurations and allocations for different system requirements may be required. On the other hand, applications with similar resource and periodicity requirements may be grouped into one NCB channel configuration and allocation.

Additionally, there may be different application requirements for one WTRU where an NCB channel with one periodicity is allocated. In this case, the NCB channel may be configured with different radio resource allocations for different intervals within one NCB allocation. For example, a SID packet interval may coincide with other UL functions such as a UL scheduling request, timing maintenance and measurement reporting, and the like, for example every 160 ms. However, if at 160 ms intervals there are more radio resources needed to accommodate extra SID packet needs, the eNB 110 may allocate more radio resources at 160 ms intervals, and less resources at non-160 ms intervals. In doing so, the eNB 110 does not need to always allocate the maximum radio resources for all the NCB channel intervals to accommodate all different scenarios, thereby making resource utilization much more efficient.

Additionally, the NCB channel should be maintained during handovers from one base station to another. To this end, a source base station exchanges signaling with a target base station to allocate the NCB channel for the WTRU 120 in the target cell to which the WTRU is being handed over. This may be accomplished by transmission via a common control channel in the source cell or a shared channel allocated to a particular WTRU 120 to convey target cell NCB channel information to the particular WTRU 120. The information may include NCB channel resources in the target cell, hopping patterns in the target cell, or the timing advance, such as the timing difference between the source and target cells. The timing difference between cells in this case may be computed by the system and transmitted to the WTRU 120 about to be handed over by the source or target base station.

The present invention may be implemented in any type of wireless communication system, as desired. By way of example, the present invention may be implemented in any type of 802 type system, XFDMA, SC-FDMA, OFDMA, E-UTRA, LTE or any other type of wireless communication system.

Additionally, the features of the present invention may be implemented by software, may be incorporated into an integrated circuit (IC) or be configured in a circuit comprising a multitude of interconnecting components. Additionally, the processors 115/125 of the eNB 110 and WTRU 120, respectively, may be configured to perform the steps of any of the methods described above. The processors 115/125 may also utilize the receivers 116/126, transmitters 117/127, and antennas 118/128, respectively, to facilitate wirelessly receiving and transmitting data.

Although the features and elements of the present invention are described in the preferred embodiments in particular combinations, each feature or element can be used alone without the other features and elements of the preferred embodiments or in various combinations with or without other features and elements of the present invention. The methods or flow charts provided in the present invention may be implemented in a computer program, software, or firmware tangibly embodied in a computer-readable storage medium for execution by a general purpose computer or a processor. Examples of computer-readable storage mediums include a read only memory (ROM), a random access memory (RAM), a register, cache memory, semiconductor memory devices, magnetic media such as internal hard disks and removable disks, magnetooptical media, and optical media such as CD-ROM disks, and digital versatile disks (DVDs).

Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any integrated circuit, and/or a state machine.

A processor in association with software may be used to implement a radio frequency transceiver for in use in a wireless transmit receive unit (WTRU), user equipment, terminal, base station, radio network controller, or any host computer. The WTRU may be used in conjunction with modules, implemented in hardware and/or software, such as a camera, a videocamera module, a videophone, a speakerphone, a vibration device, a speaker, a microphone, a television transceiver, a handsfree headset, a keyboard, a Bluetooth module, a frequency modulated (FM) radio unit, a liquid crystal display (LCD) display unit, an organic light-emitting diode (OLED) display unit, a digital music player, a media player, a video game player module, an Internet browser, and/or any wireless local area network (WLAN) module.

### Embodiments

1. A method for providing a non-contention based (NCB) channel to a plurality of wireless transmit/receive units (WTRUs) in a wireless communication system.
2. The method of embodiment 1, further comprising an evolved Node-B (eNB).
3. A method as in any preceding embodiment, further comprising establishing an NCB channel.
4. A method as in any preceding embodiment, further comprising allocating an NCB channel to a first WTRU.
5. A method as in any preceding embodiment, further comprising determining whether a reallocation of an NCB channel is required.
6. A method as in any preceding embodiment, further comprising reallocating an NCB channel based upon a reallocation determination.
7. A method as in any preceding embodiment, further comprising transmitting an NCB channel allocation to a first WTRU.
8. A method as in any preceding embodiment, further comprising configuring an NCB channel.
9. A method as in any preceding embodiment wherein a duration of an NCB channel is configured.
10. A method as in any preceding embodiment wherein a duration of an NCB channel is configured for an infinite time.
11. A method as in any preceding embodiment wherein a duration of an NCB channel is configured for a period of time.
12. A method as in any preceding embodiment an NCB channel is configured to exist at periodic intervals.
13. A method as in any preceding embodiment wherein an NCB channel is allocated to a first WTRU at a first periodic interval and reallocated to a second WTRU for a second periodic interval.
14. A method as in any preceding embodiment wherein a configuration of an NCB channel is based upon at least one of the following functions: timing advance, measurement reporting, physical resource requesting, schedule requesting, keep-alive heartbeat, hybrid automatic repeat request (HARQ) feedback and medium access control (MAC)/radio resource control (RRC) layer signaling.
15. A method as in any preceding embodiment wherein a configuration of an NCB channel is based upon a combination of the functions timing advance, measurement reporting, physical resource requesting, schedule requesting, keep-alive heartbeat, HARQ feedback and MAC/RRC layer signaling.
16. A method as in any preceding embodiment wherein a configuration of an NCB channel is based upon at least one of a quality of services (QoS) requirement for services currently active on a particular WTRU in the wireless communication system, a type of service, and an activity rate of the currently active services.
17. A method as in any preceding embodiment wherein an NCB channel is configured as a low rate shared channel.
18. A method as in any preceding embodiment, further comprising a first WTRU transmitting data over an NCB channel.
19. A method as in any preceding embodiment wherein an NCB channel is configured to provide signaling within a physical channel control field.
20. A method as in any preceding embodiment wherein an NCB channel is configured to provide signaling within a media access control (MAC) layer.
21. A method as in any preceding embodiment wherein an NCB channel is configured to provide signaling within a radio resource controller (RRC) layer.
22. A method as in any preceding embodiment, further comprising multiplexing an NCB channel.
23. A method as in any preceding embodiment wherein an NCB channel is multiplexed in the frequency domain.
24. A method as in any preceding embodiment wherein an NCB channel is multiplexed using frequency division multiplexing (FDM).
25. A method as in any preceding embodiment wherein an NCB channel is multiplexed in the code domain.
26. A method as in any preceding embodiment wherein an NCB channel is multiplexed in the code domain using spreading codes.
27. A method as in any preceding embodiment wherein an NCB channel is multiplexed in the time domain.
28. A method as in any preceding embodiment wherein an NCB channel is multiplexed in the space domain.
29. A method as in any preceding embodiment wherein an NCB channel is multiplexed using spatial division multiplexing (SDMA).
30. A method as in any preceding embodiment, further comprising reallocating an NCB channel to a second WTRU.
31. A method as in any preceding embodiment, further comprising terminating an NCB channel allocation.
32. A method as in any preceding embodiment wherein a first WTRU terminates an NCB channel allocation.
33. A method as in any preceding embodiment wherein an eNB terminates an NCB channel allocation.
34. A method as in any preceding embodiment, further comprising transmitting an NCB channel allocation to a first WTRU via downlink (DL) common control signaling.
35. A method as in any preceding embodiment, further comprising transmitting an NCB channel allocation to a first WTRU via a dedicated control channel signal that is mapped to a DL shared channel.
36. A method as in any preceding embodiment wherein an NCB channel is allocated by a DL common control channel as UL shared channel allocations.
37. A method as in any preceding embodiment, further comprising analyzing an NCB channel allocation.
38. A method as in any preceding embodiment, further comprising determining a reallocation is required due to a changing type of service requirement or a QoS requirement.
39. A method as in any preceding embodiment, further comprising determining a reallocation is required due to an NCB channel remaining idle for a particular period of time.
40. A method as in any preceding embodiment, further comprising determining a reallocation is required due to a requirement for increased or decreased data capacity.
41. A method as in any preceding embodiment, further comprising transmitting a reallocation determination to WTRUs in the wireless communication system.
42. A method as in any preceding embodiment, further comprising a first WTRU transmitting a synchronization burst or existing data packet to an eNB over an NCB channel.
43. A method as in any preceding embodiment, further comprising an eNB determining whether a timing advance (TA) adjustment is needed.
44. A method as in any preceding embodiment, further comprising an eNB transmitting a TA adjustment command to a first WTRU depending upon a determination of whether a TA is needed.
45. A method as in any preceding embodiment wherein an eNB determines that a TA adjustment is needed in order to maintain a physical synchronization between an eNB and a first WTRU.
46. A method as in any preceding embodiment wherein a TA command is transmitted to a first WTRU on a DL common control channel.
47. A method as in any preceding embodiment wherein a TA command is transmitted on a control channel mapped to a DL shared channel assignment among WTRUs.
48. A method as in any preceding embodiment wherein a synchronization burst is transmitted following a predefined period during which UL transmissions have not been occurring.
49. A method as in any preceding embodiment, further comprising a first WTRU transmitting channel quality measurements to an eNB over an NCB channel.
50. A method as in any preceding embodiment, further comprising an eNB analyzing channel quality measurements.
51. A method as in any preceding embodiment, further comprising an eNB determining whether scheduling modifications are needed.
52. A method as in any preceding embodiment, further comprising an eNB transmitting new DL scheduling assignments to a first WTRU based upon a determination of whether scheduling modifications are needed.
53. A method as in any preceding embodiment wherein an eNB transmits new DL scheduling assignments over a DL control channel.
54. A method as in any preceding embodiment, further comprising a first WTRU transmitting a request for resources over an NCB channel.
55. A method as in any preceding embodiment, further comprising a first WTRU monitoring DL common control channels.
56. A method as in any preceding embodiment, further comprising determining an allocation of resources for a first WTRU by the wireless communication system.
57. A method as in any preceding embodiment, further comprising an eNB transmitting a UL shared channel access grant allocation to a first WTRU over DL common control channels.
58. A method as in any preceding embodiment, further comprising a first WTRU transmitting over a channel allocated to a first WTRU.
59. A method as in any preceding embodiment wherein an UL shared channel access grant allocation is implied to a first WTRU based on a resource utilized for an access grant in a transmission over DL common control channels.
60. A method as in any preceding embodiment wherein a UL shared channel access grant allocation is explicitly communicated to a first WTRU.
61. A method as in any preceding embodiment wherein at least one resource block is communicated to a first WTRU as being allocated to a first WTRU.
62. A method as in any preceding embodiment wherein a UL shared channel access grant allocation includes an identifier (ID) for a first WTRU.
63. A method as in any preceding embodiment, further comprising a plurality of WTRUs transmitting a request for resources over an NCB channel and monitoring DL common control channels.
64. A method as in any preceding embodiment, further comprising determining an allocation of resources for a plurality of WTRUs.
65. A method as in any preceding embodiment, further comprising an eNB transmitting a UL shared channel access grant allocation to a plurality of WTRUs over DL common control channels.
66. A method as in any preceding embodiment, further comprising a plurality of WTRUs transmitting over their respective allocated channels.
67. A method as in any preceding embodiment, further comprising transmitting a keep-alive signal to an eNB over an NCB channel.
68. A method as in any preceding embodiment, further comprising detecting a failure of a radio link between a particular WTRU and an eNB.
69. A method as in any preceding embodiment, further comprising restoring lost connectivity between a particular WTRU and an eNB.
70. A method as in any preceding embodiment, further comprising recovering resources allocated to a particular WTRU.
71. A method as in any preceding embodiment, further comprising receiving a hybrid automatic repeat request (HARQ) transmission.
72. A method as in any preceding embodiment, further comprising transmitting an acknowledgement (ACK) over an NCB channel.
73. A method as in any preceding embodiment wherein an ACK is a positive ACK.
74. A method as in any preceding embodiment wherein an ACK is a negative ACK (NACK).
75. A method as in any preceding embodiment wherein a HARQ transmission is transmitted over an NCB channel.
76. A method as in any preceding embodiment, further comprising transmitting a process number over an NCB channel.
77. A method as in any preceding embodiment, further comprising transmitting HARQ parameters over an NCB channel.
78. A method as in any preceding embodiment, further comprising multiplexing RRC signaling messages over an NCB channel.
79. A method as in any preceding embodiment, further comprising transmitting small amounts of data over an NCB channel.
80. A method as in any preceding embodiment, further comprising coordinating MAC layer operation over an NCB channel.
81. A method as in any preceding embodiment, further comprising configuring an NCB channel for transmission by a first WTRU.
82. A method as in any preceding embodiment, further comprising allocating an NCB channel to a first WTRU.
83. A method as in any preceding embodiment, further comprising spreading an NCB channel over a plurality of sub-channels.
84. A method as in any preceding embodiment wherein a plurality of sub-channels exist within a single resource block.
85. A method as in any preceding embodiment wherein a plurality of sub-channels exist in a fraction of a resource block.
86. A method as in any preceding embodiment, further comprising changing an allocation of an NCB channel for a first WTRU.
87. A method as in any preceding embodiment wherein an allocation is changed according to a pre-configured time sequence.
88. A method as in any preceding embodiment wherein an allocation is changed according to a pre-configured frequency hopping sequence.
89. A method as in any preceding embodiment, further comprising an eNB transmitting control messages to a first WTRU.
90. A method as in any preceding embodiment wherein control messages include information including any of the following: a resource message relating to a sub-carrier, slot information, codes, and a hopping sequence.
91. A method as in any preceding embodiment wherein a hopping sequence includes an index of a prescribed set of hopping sequences to which an NCB channel is allocated for a first WTRU.
92. A method as in any preceding embodiment wherein a wireless communication system includes a source base station in a source cell and a target base station in a target cell.
93. A method as in any preceding embodiment, further comprising a source base station signaling a target base station to allocate an NCB channel for a WTRU about to be handed over.
94. A method as in any preceding embodiment, further comprising a target base station allocating an NCB channel for a WTRU about to be handed over.
95. A method as in any preceding embodiment, further comprising signaling to a WTRU an NCB channel allocation allocated by a target base station.
96. A method as in any preceding embodiment wherein an NCB channel allocation is signaled to a WTRU about to be handed over via a common control channel.
97. A method as in any preceding embodiment wherein an NCB channel allocation is signaled to a WTRU about to be handed over via a shared channel allocated to the WTRU.
98. A method as in any preceding embodiment wherein an NCB channel allocation signaled to a WTRU about to be handed over includes information relating to an NCB channel resources in a target cell.
99. A method as in any preceding embodiment wherein an NCB channel allocation signaled to a WTRU about to be handed over includes information relating to hopping sequences in a target cell.
100. A method as in any preceding embodiment wherein an NCB channel allocation signaled to a WTRU about to be handed over includes information relating to timing advance.
101. A method as in any preceding embodiment wherein timing advance information includes a timing difference between a source cell and a target cell.
102. A method as in any preceding embodiment wherein a source base station signals an NCB channel allocation to a WTRU.
103. A method as in any preceding embodiment wherein a target base station signals an NCB channel allocation to a WTRU.
104. A method as in any preceding embodiment, further comprising configuring an NCB channel for a function including any of the following: timing advance, measurement reporting, UL physical resource requesting, providing information for downlink (DL) resource scheduling, keep-alive heartbeat, HARQ feedback, and Medium Access Control (MAC) or Radio Resource Control (RRC) layer signaling.
105. A method as in any preceding embodiment, further comprising allocating an NCB channel to a first WTRU.
106. A method as in any preceding embodiment, further comprising determining whether a reallocation of an NCB channel is required.
107. A method as in any preceding embodiment, further comprising reallocating an NCB channel based upon a reallocation determination.
108. A method as in any preceding embodiment wherein an NCB channel is configured for any combination of the following functions: timing advance, measurement reporting, UL physical resource requesting, providing information for DL resource scheduling, keep-alive heartbeat, HARQ feedback, and MAC/RRC layer signaling.
109. A method as in any preceding embodiment wherein an NCB channel is allocated periodically.
110. A method as in any preceding embodiment wherein an NCB channel is allocated for a duration.
111. A method as in any preceding embodiment, further comprising reconfiguring an NCB channel after detecting a period of WTRU inactivity.
112. A method as in any preceding embodiment, further comprising reconfiguring an NCB channel based upon a detected event.
113. An eNB configured to perform a method as in any preceding embodiment.
114. The eNB of embodiment 113, further comprising a receiver.
115. An eNB as in any of embodiments 113-114, further comprising a transmitter.
116. An eNB as in any of embodiments 113-115, further comprising a processor in communication with the receiver and the transmitter.
117. An eNB as in any of embodiments 113-116 wherein a processor is configured to establish and allocate an NCB channel.
118. An eNB as in any of embodiments 113-117 wherein a processor is configured to transmit an allocation of an NCB channel to a particular WTRU.
119. An eNB as in any of embodiments 113-118 wherein a processor is configured to determine whether an NCB channel is to be reallocated.
120. An eNB as in any of embodiments 113-119 wherein a processor is configured to reallocate an NCB channel base upon a reallocation determination.
121. An eNB as in any of embodiments 113-120 wherein a processor is configured to configure an NCB channel based upon any of the following functions: timing advance, measurement reporting, UL physical resource requesting, providing information for DL resource scheduling, keep-alive heartbeat, HARQ feedback, and MAC/RRC layer signaling.
122. An eNB as in any of embodiments 113-121 wherein a processor is further configured to configure an NCB channel based upon a combination of the functions timing advance, measurement reporting, UL physical resource requesting, providing information for DL resource scheduling, keep-alive heartbeat, HARQ feedback, and MAC/RRC layer signaling.
123. An eNB as in any of embodiments 113-122 wherein a processor is configured to analyze QoS requirements.
124. A WTRU configured to perform a method as in any of embodiments 1-112.
125. The WTRU of embodiment 124, further comprising a receiver.
126. A WTRU as in any of embodiments 124-125, further comprising a processor in communication with the receiver and the transmitter.
127. A WTRU as in any of embodiments 124-126 wherein a processor is configured to receive an allocation of an NCB channel for transmissions.
128. A WTRU as in any of embodiments 124-127 wherein a processor is configured to transmit on an NCB channel.
129. A WTRU as in any of embodiments 124-128 wherein a processor is configured to receive a reallocation of an NCB channel.
130. A WTRU as in any of embodiments 124-129 wherein a processor is configured to transmit a synchronization burst over an NCB channel.
131. A WTRU as in any of embodiments 124-130 wherein a processor is configured to perform a timing adjustment.
132. A WTRU as in any of embodiments 124-131 wherein a processor is configured to transmit channel measurements over an NCB channel to an eNB.
133. A WTRU as in any of embodiments 124-132 wherein a processor is configured to receive updated scheduling assignments from an eNB.
134. A WTRU as in any of embodiments 124-133 wherein a processor is configured to transmit a resource request over an NCB channel to an eNB.
135. In a wireless communication system comprising at least one evolved Node-B (eNB) and a plurality of wireless transmit/receive units (WTRUs), a method for providing a non-contention based (NCB) channel to the plurality of WTRUs, the method comprising:
   (a) establishing an NCB channel;
   (b) allocating the NCB channel to a first WTRU;
   (c) determining whether a reallocation of the NCB channel is required; and
   (d) reallocating the NCB channel based upon the reallocation determination.
136. The method of embodiment 135, further comprising:
   (e) transmitting the NCB channel allocation to the first WTRU.
137. The method of embodiment 135 wherein step (a) further comprises configuring the NCB channel.
138. The method of embodiment 137 wherein the duration of the NCB channel is configured.
139. The method of embodiment 138 wherein the duration of the NCB channel is configured for an infinite time.
140. The method of embodiment 138 wherein the duration of the NCB channel is configured for a period of time.
141. The method of embodiment 138 wherein the NCB channel is configured to exist at periodic intervals.
142. The method of embodiment 141 wherein the NCB channel is allocated to the first WTRU at a first periodic interval and reallocated to a second WTRU for a second periodic interval.
143. The method of embodiment 136 wherein the configuration of the NCB channel is based upon at least one of the following functions: timing advance, measurement reporting, physical resource requesting, schedule requesting, keep-alive heartbeat, hybrid automatic repeat request (HARQ) feedback and medium access control (MAC)/radio resource control (RRC) layer signaling.
144. The method of embodiment 143 wherein the configuration of the NCB channel is based upon a combination of the functions timing advance, measurement reporting, physical resource requesting, schedule requesting, keep-alive heartbeat, HARQ feedback and MAC/RRC layer signaling.
145. The method of embodiment 137 wherein the configuration of the NCB channel is based upon at least one of a quality of services (QoS) requirement for services currently active on a particular WTRU in the wireless communication system, a type of service, and an activity rate of the currently active services.
146. The method of embodiment 137, wherein the NCB channel is configured as a low rate shared channel.
147. The method of embodiment 146, further comprising: (e) the first WTRU transmitting data over the NCB channel.
148. The method of embodiment 137 wherein the NCB channel is configured to provide signaling within a physical channel control field.
149. The method of embodiment 137 wherein the NCB channel is configured to provide signaling within a media access control (MAC) layer.
150. The method of embodiment 137 wherein the NCB channel is configured to provide signaling within a radio resource controller (RRC) layer.
151. The method of embodiment 135, further comprising:
   (e) multiplexing the NCB channel.
152. The method of embodiment 151 wherein the NCB channel is multiplexed in the frequency domain.
153. The method of embodiment 152 wherein the NCB channel is multiplexed using frequency division multiplexing (FDM).
154. The method of embodiment 151 wherein the NCB channel is multiplexed in the code domain.
155. The method of embodiment 154 wherein the NCB channel is multiplexed in the code domain using spreading codes.
156. The method of embodiment 151 wherein the NCB channel is multiplexed in the time domain.
157. The method of embodiment 151 wherein the NCB channel is multiplexed in the space domain.
158. The method of embodiment 157 wherein the NCB channel is multiplexed using spatial division multiplexing (SDMA).
159. The method of embodiment 135 wherein step (d) further comprises reallocating the NCB channel to a second WTRU.
160. The method of embodiment 135, further comprising:
   (e) terminating the NCB channel allocation.
161. The method of embodiment 160 wherein the first WTRU terminates the NCB channel allocation.
162. The method of embodiment 160 wherein the eNB terminates the NCB channel allocation.
163. The method of embodiment 135 further comprising:
   (e) transmitting the NCB channel allocation to the first WTRU via downlink (DL) common control signaling.
164. The method of embodiment 135 further comprising:
   (e) transmitting the NCB channel allocation to the first WTRU via a dedicated control channel signal that is mapped to a DL shared channel.
165. The method of embodiment 135 wherein the NCB channel is allocated by the DL common control channel as UL shared channel allocations.
166. The method of embodiment 135 further comprising:
   (e) analyzing the NCB channel allocation.
167. The method of embodiment 135 wherein step (c) further comprises determining a reallocation is required due to a changing type of service requirement or a QoS requirement.
168. The method of embodiment 135 wherein step (c) further comprises determining a reallocation is required due to the NCB channel remaining idle for a particular period of time.
169. The method of embodiment 135 wherein step (c) further comprises determining a reallocation is required due to a requirement for increased or decreased data capacity.
170. The method of embodiment 135 further comprising:
   (e) transmitting a reallocation determination to the WTRUs in the wireless communication system.
171. In a wireless communication system comprising at least one evolved Node-B (eNB) and a plurality of wireless transmit/receive units (WTRUs), a method for timing advance over a non-contention based (NCB) channel, the method comprising:
   (a) a first WTRU in the wireless communication system transmitting a synchronization burst or existing data packet to the eNB over an NCB channel;
   (b) the eNB determining whether a timing advance (TA) adjustment is needed; and
   (c) the eNB transmitting a TA adjustment command to the first WTRU depending upon the determination of whether a TA is needed.
172. The method of embodiment 171 wherein the eNB determines that a TA adjustment is needed in order to maintain physical synchronization between the eNB and the first WTRU.
173. The method of embodiment 171 wherein the TA command is transmitted to the first WTRU on a downlink (DL) common control channel.
174. The method of embodiment 171 wherein the TA command is transmitted on a control channel mapped to a DL shared channel assignment among WTRUs.
175. The method of embodiment 171 wherein the synchronization burst is transmitted following a predefined period during which UL transmissions have not been occurring.
176. In a wireless communication system comprising at least one evolved Node-B (eNB) and a plurality of wireless transmit/receive units (WTRUs), a method for determining scheduling for the WTRUs over a non-contention based (NCB) channel, the method comprising:
   (a) a first WTRU transmitting channel quality measurements to the eNB over the NCB channel;
   (b) the eNB analyzing the channel quality measurements;
   (c) the eNB determining whether scheduling modifications are needed; and
   (d) the eNB transmitting new downlink (DL) scheduling assignments to the first WTRU based upon the determination of whether scheduling modifications are needed.
177. The method of embodiment 176 wherein the eNB transmits new DL scheduling assignments over a DL control channel.
178. In a wireless communication system comprising at least one evolved Node-B (eNB) and a plurality of wireless transmit/receive units (WTRUs), a method for requesting and allocating resources for the WTRUs over a non-contention based (NCB) channel, the method comprising:
   (a) a first WTRU transmitting a request for resources over an NCB channel;
   (b) the first WTRU monitoring downlink (DL) common control channels;
   (c) determining an allocation of resources for the first WTRU by the wireless communication system;
   (d) the eNB transmitting an uplink (UL) shared channel access grant allocation to the first WTRU over the DL common control channels; and
   (e) the first WTRU transmitting over the channel allocated to the first WTRU.
179. The method of embodiment 178 wherein the UL shared channel access grant allocation is implied to the first WTRU based on a resource utilized for the access grant in the transmission over the DL common control channels.
180. The method of embodiment 178 wherein the UL shared channel access grant allocation is explicitly communicated to the first WTRU.
181. The method of embodiment 179 wherein at least one resource block is communicated to the first WTRU as being allocated to the first WTRU.
182. The method of embodiment 181 wherein the UL shared channel access grant allocation includes an identifier (ID) for the first WTRU.
183. The method of embodiment 178, further comprising:
   (f) a plurality of WTRUs transmitting a request for resources over the NCB channel and monitoring the DL common control channels.
184. The method of embodiment 183 further comprising:
   (g) determining an allocation of resources for the plurality of WTRUs;
   (h) the eNB transmitting the UL shared channel access grant allocation to the plurality of WTRUs over the DL common control channels; and
   (i) the plurality of WTRUs transmitting over their respective allocated channels.
185. In a wireless communication system comprising at least one evolved Node-B (eNB) and a plurality of wireless transmit/receive units (WTRUs), a method for performing a keep-alive for the WTRUs over a non-contention based (NCB) channel, the method comprising:
   (a) transmitting a keep-alive signal to the eNB over an NCB channel;
   (b) detecting a failure of the radio link between a particular WTRU and the eNB; and
   (c) restoring lost connectivity between the particular WTRU and the eNB.
186. The method of embodiment 185 further comprising:
   (d) recovering resources allocated to the particular WTRU.
187. In a wireless communication system comprising at least one evolved Node-B (eNB) and a plurality of wireless transmit/receive units (WTRUs), a method for hybrid automatic repeat request (HARQ) feedback over a non-contention based (NCB) channel, the method comprising:
   (a) receiving a HARQ transmission; and
   (b) transmitting an acknowledgement (ACK) over an NCB channel.
188. The method of embodiment 187 wherein the ACK is a positive ACK.
189. The method of embodiment 187 wherein the ACK is a negative ACK (NACK).
190. The method of embodiment 187 wherein the HARQ transmission is transmitted over the NCB channel.
191. The method of embodiment 187, further comprising:
   (c) transmitting a process number over the NCB channel.
192. The method of embodiment 187, further comprising:
   (c) transmitting HARQ parameters over the NCB channel.
193. In a wireless communication system comprising at least one evolved Node-B (eNB) and a plurality of wireless transmit/receive units (WTRUs), a method for media access control (MAC) and radio resource control (RRC) over a non-contention based (NCB) channel, the method comprising:
   (a) multiplexing RRC signaling messages over an NCB channel;
   (b) transmitting small amounts of data over the NCB channel; and
   (c) coordinating MAC layer operation over the NCB channel.
194. In a wireless communication system comprising at least one evolved Node-B (eNB) and a plurality of wireless transmit/receive units (WTRUs), a method for providing resilience against frequency selective fading, the method comprising:
   (a) configuring a non-contention based (NCB) channel for transmission by a first WTRU;
   (b) allocating the NCB channel to the first WTRU; and
   (c) spreading the NCB channel over a plurality of sub-channels.
195. The method of embodiment 194 wherein the plurality of sub-channels exist within a single resource block.
196. The method of embodiment 194 wherein the plurality of sub-channels exist in a fraction of a resource block.
197. The method of embodiment 194, further comprising:
   (d) changing the allocation of the NCB channel for the first WTRU.
198. The method of embodiment 197 wherein the allocation is changed according to a pre-configured time sequence.
199. The method of embodiment 197 wherein the allocation is changed according to a pre-configured frequency hopping sequence.
200. The method of embodiment 194 further comprising:
   (d) the eNB transmitting control messages to the first WTRU.
201. The method of embodiment 200 wherein the control messages include information selected from the group consisting of: a resource message relating to a sub-carrier, slot information, codes, and a hopping-sequence.
202. The method of embodiment 201 wherein the hopping-sequence includes an index of a prescribed set of hopping-sequences to which the NCB channel is allocated for the first WTRU.
203. In a wireless communication system comprising a source base station in a source cell, a target base station in a target cell and at least one wireless transmit/receive unit (WTRU), a method for maintaining a non-contention based (NCB) channel during a handover, the method comprising:
   (a) the source base station signaling the target base station to allocate an NCB channel for a WTRU about to be handed over;
   (b) the target base station allocating an NCB channel for the WTRU about to be handed over; and
   (c) signaling to the WTRU the NCB channel allocation allocated by the target base station.
204. The method of embodiment 203 wherein the NCB channel allocation is signaled to the WTRU about to be handed over via a common control channel.
205. The method of embodiment 203 wherein the NCB channel allocation is signaled to the WTRU about to be handed over via a shared channel allocated to the WTRU.
206. The method of embodiment 203 wherein the NCB channel allocation signaled to the WTRU about to be handed over includes information relating to NCB channel resources in the target cell.
207. The method of embodiment 203 wherein the NCB channel allocation signaled to the WTRU about to be handed over includes information relating to hopping sequences in the target cell.
208. The method of embodiment 203 wherein the NCB channel allocation signaled to the WTRU about to be handed over includes information relating to timing advance.
209. The method of embodiment 208 wherein the timing advance information includes a timing difference between the source cell and the target cell.
210. The method of embodiment 203 wherein the source base station signals the NCB channel allocation to the WTRU.
211. The method of embodiment 203 wherein the target base station signals the NCB channel allocation to the WTRU.
212. In a wireless communication system comprising at least one evolved Node-B (eNB) and a plurality of wireless transmit/receive units (WTRUs), the eNB comprising:
   a receiver;
   a transmitter; and
   a processor in communication with the receiver and the transmitter, wherein the processor is configured to establish and allocate a non-contention based (NCB) channel, transmit the allocation to a particular WTRU, determine whether the NCB channel is to be reallocated, and reallocate the NCB channel based upon the determination.
213. The eNB of embodiment 212 wherein the processor is further configured to configure the NCB channel based upon at least one of the following functions: timing advance, measurement reporting, physical resource requesting, schedule requesting, keep-alive heartbeat, hybrid automatic repeat request (HARQ) feedback and Medium Access Control (MAC)/Radio Resource Control (RRC) layer signaling.
214. The eNB of embodiment 212 wherein the processor is further configured to configure the NCB channel based upon a combination of the functions timing advance, measurement reporting, physical resource requesting, schedule requesting, keep-alive heartbeat, HARQ feedback and MAC/RRC layer signaling.
215. The eNB of embodiment 212 wherein the processor is further configured to analyze quality of service (QoS) requirements.
216. In a wireless communication system comprising at least one evolved Node-B (eNB) and a plurality of wireless transmit/receive units (WTRUs), each WTRU comprising:
   a receiver;
   a transmitter; and
   a processor in communication with the receiver and the transmitter, wherein the processor is configured to receive an allocation of a non-contention based (NCB) channel for transmissions, transmit on the NCB channel, and receive a reallocation of the NCB channel.
217. The WTRU of embodiment 216 wherein the processor is further configured to transmit a synchronization burst over the NCB channel and perform a timing adjustment.
218. The WTRU of embodiment 216 wherein the processor is further configured to transmit channel measurements over the NCB channel to the eNB and receive updated scheduling assignments from the eNB.
219. The WTRU of embodiment 216 wherein the processor is further configured to transmit a resource request over the NCB channel to the eNB.
220. In a wireless communication system comprising at least one evolved Node-B (eNB) and a plurality of wireless transmit/receive units (WTRUs), a method for providing a non-contention based (NCB) channel to the plurality of WTRUs, the method comprising:
   (a) configuring an NCB channel for a function selected from the following functions: timing advance, measurement reporting, uplink (UL) physical resource requesting, providing information for downlink (DL) resource scheduling, keep-alive heartbeat, hybrid automatic repeat request (HARQ) feedback, and Medium Access Control (MAC) or Radio Resource Control (RRC) layer signaling;
   (b) allocating the NCB channel to a first WTRU;
   (c) determining whether a reallocation of the NCB channel is required; and
   (d) reallocating the NCB channel based upon the reallocation determination.
221. The method of embodiment 220 wherein the NCB channel is configured for a combination of the following functions: timing advance, measurement reporting, UL physical resource requesting, providing information for DL resource scheduling, keep-alive heartbeat, HARQ feedback, and MAC/RRC layer signaling.
222. The method of embodiment 220 wherein the NCB channel is allocated periodically.
223. The method of embodiment 220 wherein the NCB channel is allocated for a duration.
224. The method of embodiment 220, further comprising:
   (e) reconfiguring the NCB channel after detecting a period of WTRU inactivity.
   embodiment 220
225. The method of embodiment 220, further comprising:
   (e) reconfiguring the NCB channel based upon a deteced event.

## Claims

1. A method implemented by a wireless transmit/receive unit, WTRU (120), the method comprising the steps of:
receiving an allocation of a non-contention based, NCB, uplink control channel from an evolved Node B, eNB (110), wherein the NCB uplink control channel is used by the WTRU for transmitting a plurality of types of uplink control information, wherein NCB uplink control channel resources are a combination of time multiplexed, frequency multiplexed, and code multiplexed, wherein the allocation comprises a configuration for transmitting scheduling requests over the NCB uplink control channel, and wherein the configuration indicates a periodicity assigned to the WTRU for transmitting scheduling requests on the NCB uplink control channel;
transmitting (710) a burst over the NCB uplink control channel in accordance with the allocation of the NCB uplink control channel, wherein presence of the burst on the NCB uplink control channel is indicative of a request for uplink transmission resources by the WTRU;
monitoring (710) a downlink control channel based on transmitting the burst over the NCB uplink control channel;
detecting (720) that a transmission on the downlink control channel is intended for the WTRU based on a WTRU identifier indicated in the transmission on the downlink control channel, wherein the transmission on the downlink control channel comprises an allocation of an uplink shared channel, and wherein the allocation of the uplink shared channel explicitly indicates which resource blocks of the uplink shared channel have been assigned to the WTRU for transmitting data; and
transmitting (730) the data over the uplink shared channel in accordance with the allocation of the uplink shared channel.

2. The method of claim 1, wherein the NCB uplink control channel is implemented in a single carrier frequency-division multiple-access, SC-FDMA, wireless communication system.

3. The method of claim 1, wherein the plurality of types of control information comprise hybrid automatic repeat request, HARQ, feedback, scheduling requests, and channel quality measurements.

4. The method of claim 1, further comprising releasing the NCB uplink control channel based on an implicit determination at the WTRU.

5. The method of claim 1, wherein the NCB uplink control channel utilizes a frequency hopping pattern.

6. The method of claim 1, wherein the NCB uplink control channel is a combination of time multiplexed, frequency multiplexed, code multiplexed, and spatial multiplexed.

7. The method of claim 1, wherein the WTRU is assigned sub-carrier resources of the NCB uplink control channel for transmission of the scheduling requests.

8. The method of claim 1, wherein the resource blocks assigned to the WTRU for transmitting the data are defined in time and frequency.

9. The method of claim 1, wherein the WTRU receives resource information regarding a target cell NCB uplink control channel when handing over from a source cell to a target cell, the resource information regarding the target cell NCB uplink control channel being received via the source cell.

10. A wireless transmit/receive unit, WTRU (120), comprising:
means adapted to receive an allocation of a non-contention based, NCB, uplink control channel from an evolved Node B, eNB (110), wherein the WTRU is configured to use the NCB uplink control channel for transmitting a plurality of types of uplink control information, wherein NCB uplink control channel resources are a combination of time multiplexed, frequency multiplexed, and code multiplexed, wherein the allocation comprises a configuration for transmitting scheduling requests over the NCB uplink control channel, and wherein the configuration indicates a periodicity assigned to the WTRU for transmitting scheduling requests on the NCB uplink control channel;
means adapted to transmit (710) a burst over the NCB uplink control channel in accordance with the allocation of the NCB uplink control channel, wherein presence of the burst on the NCB uplink control channel is indicative of a request for uplink transmission resources by the WTRU;
means adapted to monitor (710) a downlink control channel based on transmitting the burst over the NCB uplink control channel;
means adapted to detect (720) that a transmission on the downlink control channel is intended for the WTRU based on a WTRU identifier indicated in the transmission on the downlink control channel, wherein the transmission on the downlink control channel comprises an allocation of an uplink shared channel, and wherein the allocation of the uplink shared channel explicitly indicates which resource blocks of the uplink shared channel have been assigned to the WTRU for transmitting data; and
means adapted to transmit (730) the data over the uplink shared channel in accordance with the allocation of the uplink shared channel.

11. The WTRU of claim 10, wherein the NCB uplink control channel is implemented in a single carrier frequency-division multiple-access, SC-FDMA, wireless communication system.

12. The WTRU of claim 10, wherein the plurality of types of control information comprise hybrid automatic repeat request, HARQ, feedback, scheduling requests, and a channel quality measurements.

13. The WTRU of claim 10, further comprising means adapted to release the NCB uplink control channel based on an implicit determination at the WTRU.

14. The WTRU of claim 10, wherein the NCB uplink control channel utilizes a frequency hopping pattern.

15. The WTRU of claim 10, wherein the NCB uplink control channel is a combination of time multiplexed, frequency multiplexed, code multiplexed, and spatial multiplexed.

16. The WTRU of claim 10, wherein the WTRU is assigned sub-carrier resources of the NCB uplink control channel for transmission of the scheduling requests.

17. The WTRU of claim 10, wherein the resource blocks assigned to the WTRU for transmitting the data are defined in time and frequency.

18. The WTRU of claim 10, wherein the WTRU is configured to receive resource information regarding a target cell NCB uplink control channel when handing over from a source cell to a target cell, the resource information regarding the target cell NCB uplink control channel being received via the source cell.

19. An evolved Node-B, eNB (110), comprising:
means adapted to transmit an allocation of a non-contention based, NCB, uplink control channel to a wireless transmit/receive unit, WTRU, (120), wherein the eNB is configured to receive a plurality of types of uplink control information from the WTRU via the NCB uplink control channel, wherein NCB uplink control channel resources are a combination of time multiplexed, frequency multiplexed, and code multiplexed, wherein the allocation comprises a configuration for transmitting scheduling requests over the NCB uplink control channel, and wherein the configuration indicates a periodicity assigned to the WTRU for transmitting scheduling requests on the NCB uplink control channel;
means adapted to receive a burst over the NCB uplink control channel in accordance with the allocation of the NCB uplink control channel, wherein presence of the burst on the NCB uplink control channel is indicative of a request for uplink transmission resources by the WTRU;
means adapted to allocate resources for the WTRU based on the burst received from the WTRU and to transmit a downlink control channel transmission to the WTRU, wherein the downlink control channel transmission comprises an allocation of an uplink shared channel, wherein the downlink control channel transmission indicates a WTRU identifier of the WTRU, and wherein the allocation of the uplink shared channel explicitly indicates which resource blocks of the uplink shared channel have been assigned to the WTRU for transmitting data;
means adapted to receive the data over the uplink shared channel in accordance with the allocation of the uplink shared channel.

20. The eNB of claim 19, wherein the NCB uplink control channel is implemented in a single carrier frequency-division multiple-access, SC-FDMA, wireless communication system.

21. The eNB of claim 19, wherein the plurality of types of control information comprise hybrid automatic repeat request, HARQ, feedback, scheduling requests, and a channel quality measurements.

22. The eNB of claim 19, wherein the NCB uplink control channel utilizes a frequency hopping pattern.

23. The eNB of claim 19, wherein the eNB is configured to allocate the NCB uplink control channel among a plurality of WTRUs using a combination of time multiplexing, frequency multiplexing, code multiplexing, and spatial multiplexing.

24. The eNB of claim 19, wherein the eNB is configured to send resource information regarding a target cell NCB uplink control channel to the WTRU when instructing the WTRU to hand over from a source cell to a target cell.

## Patentansprüche

1. Verfahren, das durch eine drahtlose Sende-/Empfangseinheit, WTRU (120), ausgeführt wird, wobei das Verfahren die folgenden Schritte umfasst:
Empfangen einer Zuweisung eines nicht auf Konflikt basierenden, NCB, Aufwärtsstrecken-Steuerkanals von einem entwickelten Knoten B, eNB (110), wobei der NCB-Aufwärtsstrecken-Steuerkanal durch die WTRU verwendet wird, um mehrere Typen von Aufwärtsstrecken-Steuerinformationen zu übertragen, wobei NCB-Aufwärtsstrecken-Steuerkanalressourcen eine Kombination aus zeit-gemultiplext, frequenz-gemultiplext und code-gemultiplext sind, wobei die Zuweisung eine Konfiguration zum Senden von Planungsanforderungen über den NCB-Aufwärtsstrecken-Steuerkanal umfasst und wobei die Konfiguration eine Periodizität anzeigt, die der WTRU zum Senden der Planungsanforderungen auf dem NCB-Aufwärtsstrecken-Steuerkanal zugeordnet wurde;
Senden (710) einer Signalfolge über den NCB-Aufwärtsstrecken-Steuerkanal gemäß der Zuweisung des NCB-Aufwärtsstrecken-Steuerkanals, wobei das Vorhandensein der Signalfolge auf dem NCB-Aufwärtsstrecken-Steuerkanal ein Hinweis auf eine Anforderung von Aufwärtsstrecken-Senderessourcen durch die WTRU ist;
Überwachen (710) eines Abwärtsstrecken-Steuerkanals basierend auf dem Senden der Signalfolge über den NCB-Aufwärtsstrecken-Steuerkanal;
Detektieren (720), dass eine Sendung auf dem Abwärtsstrecken-Steuerkanal für die WTRU bestimmt ist, basierend auf einer WTRU-Kennung, die in der Sendung auf dem Abwärtsstrecken-Steuerkanal angezeigt wird, wobei die Sendung auf dem Abwärtsstrecken-Steuerkanal eine Zuweisung eines gemeinsam genutzten Aufwärtsstreckenkanals umfasst und wobei die Zuweisung des gemeinsam genutzten Aufwärtsstreckenkanals explizit anzeigt, welche Ressourcenblöcke des gemeinsam genutzten Aufwärtsstreckenkanals der WTRU zum Senden von Daten zugeordnet wurden; und
Senden (730) der Daten über den gemeinsam genutzten Aufwärtsstreckenkanal gemäß der Zuweisung des gemeinsam genutzten Aufwärtsstreckenkanals.

2. Verfahren nach Anspruch 1, wobei der NCB-Aufwärtsstrecken-Steuerkanal in einem drahtlosen Single Carrier Frequency-Division Multiple-Access-SC-FDMA-Kommunikationssystem ausgeführt wird.

3. Verfahren nach Anspruch 1, wobei die mehreren Typen von Steuerinformationen eine hybride automatische Wiederholungsaufforderungs-HARQ-Rückmeldung, Planungsanforderungen und Kanalqualitätsmessungen umfassen.

4. Verfahren nach Anspruch 1, ferner umfassend das Freigeben des NCB-Aufwärtsstrecken-Steuerkanals basierend auf einer impliziten Bestimmung in der WTRU.

5. Verfahren nach Anspruch 1, wobei der NCB-Aufwärtsstrecken-Steuerkanal ein Frequenzsprungmuster umfasst.

6. Verfahren nach Anspruch 1, wobei der NCB-Aufwärtsstrecken-Steuerkanal eine Kombination aus zeit-gemultiplext, frequenz-gemultiplext, code-gemultiplext und räumlich gemultiplext ist.

7. Verfahren nach Anspruch 1, wobei der WTRU Subträger-Ressourcen des NCB-Aufwärtsstrecken-Steuerkanals zum Senden der Planungsanforderungen zugeordnet werden.

8. Verfahren nach Anspruch 1, wobei die Ressourcenblöcke, die der WTRU zum Senden der Daten zugeordnet werden, hinsichtlich Zeit und Frequenz definiert werden.

9. Verfahren nach Anspruch 1, wobei die WTRU bei der Übergabe von einer Ursprungszelle zu einer Zielzelle Ressourceninformationen betreffend einen Zielzellen-NCB-Aufwärtsstrecken-Steuerkanal empfängt, wobei die Ressourceninformationen betreffend den Zielzellen-NCB-Aufwärtsstrecken-Steuerkanal über die Ursprungszelle empfangen werden.

10. Drahtlose Sende-/Empfangseinheit, WTRU (120), umfassend:
Mittel, die dafür eingerichtet sind, eine Zuweisung eines nicht auf Konflikt basierenden, NCB, Aufwärtsstrecken-Steuerkanals von einem entwickelten Knoten B, eNB (110) zu empfangen, wobei die WTRU dafür ausgelegt ist, den NCB-Aufwärtsstrecken-Steuerkanal zum Senden mehrerer Typen von Aufwärtsstrecken-Steuerinformationen zu verwenden, wobei NCB-Aufwärtsstrecken-Steuerkanalressourcen eine Kombination aus zeit-gemultiplext, frequenz-gemultiplext und code-gemultiplext sind, wobei die Zuweisung eine Konfiguration zum Senden von Planungsanforderungen über den NCB-Aufwärtsstrecken-Steuerkanal umfasst und wobei die Konfiguration eine Periodizität anzeigt, die der WTRU zum Senden der Planungsanforderungen auf dem NCB-Aufwärtsstrecken-Steuerkanal zugeordnet wurde;
Mittel, die dafür eingerichtet sind, eine Signalfolge über den NCB-Aufwärtsstrecken-Steuerkanal gemäß der Zuweisung des NCB-Aufwärtsstrecken-Steuerkanals zu senden (710), wobei das Vorhandensein der Signalfolge auf dem NCB-Aufwärtsstrecken-Steuerkanal ein Hinweis auf eine Anforderung von Aufwärtsstrecken-Senderessourcen durch die WTRU ist;
Mittel, die dafür eingerichtet sind, einen Abwärtsstrecken-Steuerkanal basierend auf dem Senden der Signalfolge über den NCB-Aufwärtsstrecken-Steuerkanal zu überwachen (710);
Mittel, die dafür eingerichtet sind, basierend auf einer WTRU-Kennung, die in der Sendung auf dem Abwärtsstrecken-Steuerkanal angezeigt wird, zu detektieren (720), dass eine Sendung auf dem Abwärtsstrecken-Steuerkanal für die WTRU bestimmt ist, wobei die Sendung auf dem Abwärtsstrecken-Steuerkanal eine Zuweisung eines gemeinsam genutzten Aufwärtsstreckenkanals umfasst und wobei die Zuweisung des gemeinsam genutzten Aufwärtsstreckenkanals explizit anzeigt, welche Ressourcenblöcke des gemeinsam genutzten Aufwärtsstreckenkanals der WTRU zum Senden von Daten zugeordnet wurden; und
Mittel, die dafür eingerichtet sind, die Daten über den gemeinsam genutzten Aufwärtsstreckenkanal gemäß der Zuweisung des gemeinsam genutzten Aufwärtsstreckenkanals zu senden (730).

11. WTRU nach Anspruch 10, wobei der NCB-Aufwärtsstrecken-Steuerkanal in einem drahtlosen Single Carrier Frequency-Division Multiple-Access-SC-FDMA-Kommunikationssystem ausgeführt wird.

12. WTRU nach Anspruch 10, wobei die mehreren Typen von Steuerinformationen eine hybride automatische Wiederholungsaufforderungs- HARQ-Rückmeldung, Planungsanforderungen und Kanalqualitätsmessungen umfassen.

13. WTRU nach Anspruch 10, ferner umfassend Mittel, die dafür eingerichtet sind, den NCB-Aufwärtsstrecken-Steuerkanal basierend auf einer impliziten Bestimmung in der WTRD freizugeben.

14. WTRU nach Anspruch 10, wobei der NCB-Aufwärtsstrecken-Steuerkanal ein Frequenzsprungmuster nutzt.

15. WTRU nach Anspruch 10, wobei der NCB-Aufwärtsstrecken-Steuerkanal eine Kombination aus zeit-gemultiplext, frequenz-gemultiplext, code-gemultiplext und räumlich gemultiplext ist.

16. WTRU nach Anspruch 10, wobei der WTRU Subträger-Ressourcen des NCB-Aufwärtsstrecken-Steuerkanals zum Senden der Planungsanforderungen zugeordnet werden.

17. WTRU nach Anspruch 10, wobei die Ressourcenblöcke, die der WTRU zum Senden der Daten zugeordnet werden, hinsichtlich Zeit und Frequenz definiert werden.

18. WTRU nach Anspruch 10, wobei die WTRU dafür ausgelegt ist, bei der Übergabe von einer Ursprungszelle zu einer Zielzelle Ressourceninformationen betreffend einen Zielzellen-NCB-Aufwärtsstrecken-Steuerkanal zu empfangen, wobei die Ressourceninformationen betreffend den Zielzellen-NCB-Aufwärtsstrecken-Steuerkanal über die Ursprungszelle empfangen werden.

19. Entwickelter Knoten-B, eNB (110), umfassend:
Mittel, die dafür eingerichtet sind, eine Zuweisung eines nicht auf Konflikt basierenden, NCB, Aufwärtsstrecken-Steuerkanals an eine drahtlose Sende-/Empfangseinheit, WTRU, (120) zu senden, wobei der eNB dafür ausgelegt ist, mehrere Typen von Aufwärtsstrecken-Steuerinformationen von der WTRU über den NCB-Aufwärtsstrecken-Steuerkanal zu empfangen, wobei NCB-Aufwärtsstrecken-Steuerkanalressourcen eine Kombination aus zeit-gemultiplext, frequenz-gemultiplext und code-gemultiplext sind, wobei die Zuweisung eine Konfiguration zum Senden von Planungsanforderungen über den NCB-Aufwärtsstrecken-Steuerkanal umfasst, und wobei die Konfiguration eine Periodizität anzeigt, die der WTRU zum Senden der Planungsanforderungen auf dem NCB-Aufwärtsstrecken-Steuerkanal zugeordnet wurde;
Mittel, die dafür eingerichtet sind, eine Signalfolge über den NCB-Aufwärtsstrecken-Steuerkanal gemäß der Zuweisung des NCB-Aufwärtsstrecken-Steuerkanals zu empfangen, wobei das Vorhandensein der Signalfolge auf dem NCB-Aufwärtsstrecken-Steuerkanal ein Hinweis auf eine Anforderung von Aufwärtsstrecken-Senderessourcen durch die WTRU ist;
Mittel, die dafür eingerichtet sind, Ressourcen für die WTRU basierend auf der von der WTRU empfangenen Signalfolge zuzuweisen und eine Abwärtsstrecken-Steuerkanal-Sendung an die WTRU zu senden, wobei die Abwärtsstrecken-Steuerkanal-Sendung eine Zuweisung eines gemeinsam genutzten Aufwärtsstreckenkanals umfasst, wobei die Abwärtsstrecken-Steuerkanal-Sendung eine WTRU-Kennung der WTRU anzeigt und wobei die Zuweisung des gemeinsam genutzten Aufwärtsstreckenkanals explizit anzeigt, welche Ressourcenblöcke des gemeinsam genutzten Aufwärtsstreckenkanals der WTRU zum Senden von Daten zugeordnet wurden;
Mittel, die dafür eingerichtet sind, die Daten über den gemeinsam genutzten Aufwärtsstreckenkanal gemäß der Zuweisung des gemeinsam genutzten Aufwärtsstreckenkanals zu empfangen.

20. eNB nach Anspruch 19, wobei der NCB-Aufwärtsstrecken-Steuerkanal in einem drahtlosen Single Carrier Frequency-Division Multiple-Access-SC-FDMA-Kommunikationssystem ausgeführt wird.

21. eNB nach Anspruch 19, wobei die mehreren Typen von Steuerinformationen eine hybride automatische Wiederholungsaufforderungs-HARQ-Rückmeldung, Planungsanforderungen und Kanalqualitätsmessungen umfassen.

22. eNB nach Anspruch 19, wobei der NCB-Aufwärtsstrecken-Steuerkanal ein Frequenzsprungmuster nutzt.

23. eNB nach Anspruch 19, wobei der eNB dafür ausgelegt ist, den NCB-Aufwärtsstrecken-Steuerkanal unter mehreren WTRUs zuzuweisen, indem eine Kombination aus zeit-gemultiplext, frequenz-gemultiplext, code-gemultiplext und räumlich gemultiplext genutzt wird.

24. eNB nach Anspruch 19, wobei der eNB dafür ausgelegt ist, Ressourceninformationen betreffend einen Zielzellen-NCB-Aufwärtsstrecken-Steuerkanal an die WTRU zu senden, wenn die WTRU angewiesen wird, von einer Ursprungszelle zu einer Zielzelle zu übergeben.

## Revendications

1. Procédé implémenté par une unité d'émission/réception sans fil WTRU (120), le procédé comprenant les étapes consistant à :
recevoir une allocation d'un canal de commande en liaison montante non basée sur la gestion de conflits, NCB, provenant d'un noeud B évolué, eNB (110), dans lequel le canal de commande en liaison montante NCB est utilisé par la WTRU pour transmettre une pluralité de types d'informations de commande en liaison montante, dans lequel les ressources de canal de commande en liaison montante NCB sont une combinaison de multiplexage temporel, multiplexage de fréquence et multiplexage de code, dans lequel l'allocation comprend une configuration pour transmettre des demandes de programmation via le canal de commande en liaison montante NCB et dans lequel la configuration indique une périodicité assignée à la WTRU pour transmettre des demandes de programmation sur le canal de commande en liaison montante NCB;
transmettre (710) une rafale via le canal de commande en liaison montante NCB conformément à l'allocation du canal de commande en liaison montante NCB, dans lequel la présence de la rafale sur le canal de commande en liaison montante NCB indique une demande de ressource de transmission en liaison montante par la WTRU;
surveiller (710) un canal de commande en liaison descendante basé sur la transmission de la rafale via le canal de commande en liaison montante NCB;
détecter (720) qu'une transmission sur le canal de commande en liaison descendante est destinée à la WTRU sur la base d'un identifiant WTRU indiqué dans la transmission sur le canal de commande en liaison descendante, dans lequel la transmission sur le canal de commande en liaison descendante comprend une allocation d'un canal partagé en liaison montante et dans lequel l'allocation du canal partagé en liaison montante indique explicitement quels blocs de ressources du canal partagé en liaison montante ont été assignés à la WTRU pour transmettre des données ; et
transmettre (730) les données via le canal partagé en liaison montante conformément à l'allocation du canal partagé en liaison montante.

2. Procédé selon la revendication 1, dans lequel le canal de commande en liaison montante NCB est implémenté dans un système de communication sans fil à accès multiple par répartition en fréquence à porteuse unique, SC-FDMA.

3. Procédé selon la revendication 1, dans lequel la pluralité de type d'informations de commande comprend un retour d'information de demande de répétition automatique hybride, HARQ, des demandes de programmation et des mesures de qualité de canal.

4. Procédé selon la revendication 1, comprenant en outre de libérer le canal de commande en liaison montante NCB sur la base d'une détermination implicite au niveau de la WTRU.

5. Procédé selon la revendication 1, dans lequel le canal de commande en liaison montante NCB utilise un modèle de saut de fréquence.

6. Procédé selon la revendication 1, dans lequel le canal de commande en liaison montante NCB est une combinaison de multiplexage temporel, multiplexage de fréquence, multiplexage de code et multiplexage spatial.

7. Procédé selon la revendication 1, dans lequel la WTRU se voit assigner des ressources de sous porteuses du canal de commande en liaison montante NCB à des fins de transmission de demandes de programmation.

8. Procédé selon la revendication 1, dans lequel les blocs de ressources assignées à la WTRU pour transmettre les données sont définis en temps et fréquence.

9. Procédé selon la revendication 1, dans lequel la WTRU reçoit une information de ressources concernant un canal de commande en liaison montante NCB de cellule cible lors d'un transfert intercellulaire d'une cellule source à une cellule cible, l'information de ressources concernant le canal de commande en liaison montante NCB de cellule cible étant reçu via la cellule source.

10. Unité d'émission/réception sans fil WTRU (120) comprenant :
un moyen adapté pour recevoir une allocation d'un canal de commande en liaison montante non basée sur la gestion de conflits, NCB, provenant d'un noeud B évolué, eNB (110), dans lequel le canal de commande en liaison montante NCB est utilisé par la WTRU pour transmettre une pluralité de type d'informations de commande en liaison montante, dans lequel les ressources de canal de commande en liaison montante NCB sont une combinaison de multiplexage temporel, multiplexage de fréquence et multiplexage de code, dans lequel l'allocation comprend une configuration pour transmettre des demandes de programmation via le canal de commande en liaison montante NCB et dans lequel la configuration indique une périodicité assignée à la WTRU pour transmettre des demandes de programmation sur le canal de commande en liaison montante NCB;
un moyen adapté pour transmettre (710) une rafale via le canal de commande en liaison montante NCB conformément à l'allocation du canal de commande en liaison montante NCB, dans lequel la présence de la rafale sur le canal de commande en liaison montante NCB indique une demande de ressource de transmission en liaison montante par la WTRU;
un moyen adapté pour surveiller (710) un canal de commande en liaison descendante basé sur la transmission de la rafale via le canal de commande en liaison montante NCB;
un moyen adapté pour détecter (720) qu'une transmission sur le canal de commande en liaison descendante est destinée à la WTRU sur la base d'un identifiant WTRU indiqué dans la transmission sur le canal de commande en liaison descendante, dans lequel la transmission sur le canal de commande en liaison descendante comprend une allocation d'un canal partagé en liaison montante et dans lequel l'allocation du canal partagé en liaison montante indique explicitement quels blocs de ressources du canal partagé en liaison montante ont été assignés à la WTRU pour transmettre des données ; et
un moyen adapté pour transmettre (730) les données via le canal partagé en liaison montante conformément à l'allocation du canal partagé en liaison montante.

11. WTRU selon la revendication 10, dans laquelle le canal de commande en liaison montante NCB est implémenté dans un système de communication sans fil à accès multiple par répartition en fréquence à porteuse unique, SC-FDMA.

12. WTRU selon la revendication 10, dans laquelle la pluralité de types d'informations de commande comprend un retour d'information de demande de répétition automatique hybride, HARQ, des demandes de programmation et des mesures de qualité de canal.

13. WTRU selon la revendication 10, comprenant en outre un moyen un adapté pour libérer le canal de commande en liaison montante NCB sur la base d'une détermination implicite au niveau de la WTRU.

14. WTRU selon la revendication 10, dans laquelle le canal de commande en liaison montante NCB utilise un modèle de saut de fréquence.

15. WTRU selon la revendication 10, dans laquelle le canal de commande en liaison montante NCB est une combinaison de multiplexage temporel, multiplexage de fréquence, multiplexage de code et multiplexage spatial.

16. WTRU selon la revendication 10, dans laquelle la WTRU se voit assigner des ressources de sous porteuses du canal de commande en liaison montante NCB à des fins de transmission de demandes de programmation.

17. WTRU selon la revendication 10, dans laquelle les blocs de ressources assignés à la WTRU pour la transmission des données sont définis en temps et fréquence.

18. WTRU selon la revendication 10, dans laquelle la WTRU est configurée pour recevoir une information de ressources concernant un canal de commande en liaison montante NCB de cellule cible lors d'un transfert intercellulaire d'une cellule source à une cellule cible, l'information de ressources concernant le canal de commande en liaison montante NCB de cellule cible étant reçu via la cellule source.

19. Noeud B évolué, eNB (110), comprenant :
un moyen adapté pour transmettre une allocation d'un canal de commande en liaison montante n'étant pas basé sur la gestion des conflits, NCB, à l'unité d'émission/réception sans fil, WTRU (120), dans lequel le eNB est configuré pour recevoir une pluralité de types d'informations de commande de liaison montante provenant de la WTRU via le canal de commande en liaison montante NCB, dans lequel les ressources de canal de commande en liaison montante NCB sont une combinaison de multiplexage temporel, multiplexage de fréquence et multiplexage de code, dans lequel l'allocation comprend une configuration pour transmettre des demandes de programmation via le canal de commande en liaison montante NCB et dans lequel la configuration indique une périodicité assignée à la WTRU pour transmettre des demandes de programmation sur le canal de commande en liaison montante NCB ;
un moyen adapté pour recevoir une rafale via le canal de commande en liaison montante NCB conformément à l'allocation du canal de commande en liaison montante NCB, dans lequel la présence de la rafale sur le canal de commande en liaison montante NCB indique une demande de ressource de transmission en liaison montante par la WTRU ;
un moyen adapté pour allouer des ressources pour la WTRU sur la base de la rafale reçue depuis la WTRU et transmettre une transmission de canal de commande en liaison descendante à la WTRU, dans lequel la transmission de canal de commande en liaison descendante comprend une allocation d'un canal partagé en liaison montante, dans lequel la transmission de canal de commande en liaison descendante indique un identifiant WTRU de la WTRU ; et dans lequel l'allocation du canal partagé en liaison montante indique explicitement quels blocs de ressources du canal partagé en liaison montante ont été assignés à la WTRU pour transmettre des données ;
un moyen adapté pour recevoir les données via le canal partagé en liaison montante conformément à l'allocation du canal partagé en liaison montante.

20. eNB selon la revendication 19, dans lequel le canal de commande en liaison montante NCB est implémenté dans un système de communication sans fil à accès multiple par répartition en fréquence à porteuse unique, SC-FDMA.

21. eNB selon la revendication 19, la pluralité de types d'informations de commande comprend un retour d'information de demande de répétition automatique hybride, HARQ, des demandes de programmation et des mesures de qualité de canal.

22. eNB selon la revendication 19, dans lequel le canal de commande en liaison montante NCB utilise un modèle de saut de fréquence.

23. eNB selon la revendication 19, dans lequel l'eNB est configuré pour allouer le canal de commande en liaison montante NCB parmi une pluralité de WTRUs en utilisant une combinaison de multiplexage temporel, multiplexage de fréquence, multiplexage de code et multiplexage spatial.

24. eNB selon la revendication 19, dans lequel l'eNB est configuré pour envoyer une information de ressources concernant un canal de commande en liaison montante NCB de cellule cible à la WTRU lors de l'instruction à la WTRU d'effectuer un transfert intercellulaire d'une cellule source à une cellule cible.
